# EUROPÄISCHE PATENTANMELDUNG

(11) **EP 4 011 541 A1**
(43) Veröffentlichungstag der Anmeldung: **15.06.2022**
(21) Anmeldenummer: 21212841.7
(22) Anmeldetag: 07.12.2021
(51) Int. Cl.: B23K 20/00, B23K 20/02, B23K 20/24, B23K 26/073, B23K 26/20, B23K 26/21, B23K 26/32, E04G 7/30, E04G 7/32, B23K 26/322, B23K 101/28, B23K 103/04, B23K 103/10

(54) **VERFAHREN UND VORRICHTUNG ZUM VERSCHWEISSEN EINES ERSTEN BAUELEMENTS MIT EINEM ZWEITEN BAUELEMENT UND HORIZONTALRIEGEL**

(30) Priorität: 11.12.2020 DE 102020133116
(71) Anmelder: PERI SE, 89264 Weißenhorn (DE)
(72) Erfinder: Mikic, Erzad, 89264 Weißenhorn (DE)
(74) Vertreter: Lorenz, Markus

(57) **Zusammenfassung**

Die Erfindung betrifft ein Verfahren zum Verschweißen eines ersten Bauelements (1) mit einem zweiten Bauelement (2) mittels einer Lasereinrichtung (4). Das erste Bauelement (1) und das zweite Bauelement (2) werden zum Verschweißen in Kontakt zueinander gebracht. Alle Kontaktflächen (10) des ersten Bauelements (1) und/oder des zweiten Bauelements (2) zwischen dem ersten Bauelement (1) und dem zweiten Bauelement (2) werden gleichzeitig mittels der Lasereinrichtung (4) erhitzt und plastisch erweicht. Das erste Bauelement (1) und das zweite Bauelement (2) werden aufeinandergepresst. Eine um die Kontaktflächen (10) umlaufende Stoßkante (11) zwischen dem ersten Bauelement (1) und dem zweiten Bauelement (2) wird unter Ausbildung einer Schweißnaht (13) wenigstens entlang eines Abschnitts mittels der Lasereinrichtung (4) verschweißt.

## Beschreibung

Die Erfindung betrifft ein Verfahren zum Verschweißen eines ersten Bauelements mit einem zweiten Bauelement mittels einer Lasereinrichtung nach dem Oberbegriff von Anspruch 1.

Die Erfindung betrifft auch eine Vorrichtung zum Verschweißen eines ersten Bauelements mit einem zweiten Bauelement, aufweisend eine Kontakteinrichtung, um das erste Bauelement und das zweite Bauelement miteinander in Kontakt zu bringen, und aufweisend eine Lasereinrichtung, um das erste Bauelement und das zweite Bauelement miteinander zu verschweißen.

Die Erfindung betrifft ferner einen Horizontalriegel, insbesondere für ein Gerüst, aufweisend ein Riegelrohr, wobei an wenigstens einer Stirnseite des Riegelrohrs ein Riegelkopf angeschweißt ist.

Verfahren zum Verschweißen eines ersten Bauelement mit einem zweiten Bauelement sind aus dem allgemeinen Stand der Technik in vielfältigen Ausführungsformen bekannt, um eine stoffschlüssige Verbindung zwischen den beiden Bauelementen herzustellen.

Durch das Verschweißen wird eine unlösbare Verbindung zwischen den Bauelementen unter Anwendung von Wärme und/oder Druck hergestellt, wobei das Schweißen mit oder ohne Schweißzusatzwerkstoffe erfolgen kann. Bekannt sind zum Beispiel Pressschweißverfahren, zu denen unter anderem das Widerstandsschweißen, das Kaltpressschweißen, das Reibschweißen, das Ultraschallschweißen, das Sprengschweißen, das elektromagnetische Pulsschweißen und das Diffusionsschweißen gehören. Ferner sind auch Schmelzschweißverfahren bekannt, zu denen insbesondere das Gasschmelzschweißen, das Lichtbogenschweißen, das Elektronenstrahlschweißen und auch das Laserschweißen gehört.

Die verschiedenen Schweißverfahren haben unterschiedliche Vor- und Nachteile, die aus dem Stand der Technik bekannt sind. Geschweißt werden im Stand der Technik insbesondere metallische Bauelemente, aber auch Bauelement aus Kunststoff. Das Verschweißen von Metall und von Kunststoff kann sich dabei unterscheiden bzw. stellt unterschiedliche Anforderungen.

Ein gattungsgemäßes Verfahren und eine gattungsgemäße Vorrichtung zum Verschweißen eines ersten Bauelements mit einem zweiten Bauelements mittels einer Lasereinrichtung ist aus der EP 0 249 579 B1 bekannt.

Die gattungsgemäße Schrift offenbart ein Verfahren zum Laserstumpfschweißen von zwei Bauelementen aus Stahl mit mittlerem oder hohem Karbongehalt. Vorgesehen ist, dass die zu verschweißenden Flächen der Metallteile in gegenseitigen Kontakt gebracht werden und die beiden Metallteile während des Schweißens zusammengepresst werden. Anschließend wird der Laserstrahl einer Lasereinrichtung, welche auch mehr als einen Laser umfassen kann, relativ zu den beiden Metallteilen längs der Seiten einer Berührungszone bewegt. Die Geschwindigkeit der Vorbeibewegung der Laserstrahlen relativ zu den Metallteilen soll typischerweise bei 3 bis 5 m/min liegen.

Es hat sich gezeigt, dass sich dadurch, dass die zu verschweißenden Bauelemente während des Laserschweißens aneinandergepresst werden, eine besonders gute Verbindung ergibt.

Aus der EP 1 366 890 B1 und der EP 2 591 875 B1 sind ebenfalls Verfahren zum Laserschweißen bekannt. Dabei wird vorgeschlagen, dass zum Laserschweißen von Kunststoffwerkstücken ein linienförmiger Laserstrahl eingesetzt wird, der eine vollständig homogene Leistungsdichteverteilung des Strahlprofils aufweisen und der keine bzw. eine äußerst kleine Strahldifferenz besitzen soll. In der EP 2 591 875 B1 wird vorgeschlagen, dass der von der Laserstrahlquelle erzeugte Laserstrahl umgeformt und homogenisiert wird. Durch die linienförmige Umformung des Laserstrahls soll erreicht werden, dass sich die Bearbeitungszeit eines Werkstücks gegenüber der bei der Bearbeitungszeit, wenn ein rundgeformten Laserstrahl verwendet wird, reduziert, da die Länge des linienförmigen Laserstrahls den Durchmesser des runden Laserstrahls übertrifft. Es ist aus dem Stand der Technik bekannt, dass in Abstrahlrichtung nach einer Laserquelle eine Laseroptik zur Formung des Laserstrahls und zur Projizierung des Laserstrahls auf das zu bearbeitende Bauelement angeordnet ist, wobei auch eine Lasermaske Verwendung finden kann. Dabei wird das üblicherweise runde ursprüngliche Strahlprofil des Laserstrahls im Durchmesser verändert oder in ein linienförmiges Strahlprofil umgewandelt und auf das Bauelement, beispielsweise eine zu verschweißende Stoßkante zwischen zwei Bauelementen, fokussiert. Es ist bekannt, dass der Laserstrahl auf die zu bearbeitenden Bereiche des Werkstücks entweder punktuell-sequenziell, quasi-simultan oder simultan einwirkt. Bei der punktuell-sequenziellen Bearbeitung werden der Laser und das Werkstück relativ zueinander langsam bewegt. Bei der quasi-simultanen Bearbeitung wird der Laserstrahl beispielsweise mittels einer Scannereinrichtung sehr schnell über das Werkstück geführt, während bei der simultanen Bearbeitung weder der Laser noch das Werkstück gegeneinander verschoben werden.

Eine Anforderung beim Verschweißen eines ersten Bauelements mit einem zweiten Bauelement besteht darin, dass die Bauelemente Toleranzen aufweisen können, insbesondere Längentoleranzen und Anschweißwinkeltoleranzen. Derartige Toleranzen lassen sich beim Laserschweißen nicht oder nur unzureichend ausgleichen. Aufgrund der Toleranzen kann es auch dazu kommen, dass zu wenig Material zum Verschweißen vorhanden ist, das heißt es können Materialverluste bzw. Dickenverluste auftreten, die das Ergebnis des Schweißprozesses negativ beeinflussen. Dies gilt insbesondere, da beim herkömmlichen Laserschweißen keine Schweißzusatzwerkstoffe verwendet werden, so dass ein aufgrund von Toleranzen fehlendes Material bei den Bauelementen im Bereich der Schweißnaht nicht ausgeglichen werden kann.

Das toleranzbedingte Fehlen von Material lässt sich mit anderen Schweißverfahren, insbesondere mit Schweißverfahren, bei denen Schweißzusatzstoffe verwendet werden, zwar besser ausgleichen, in der Praxis ist jedoch häufig trotzdem ein Laserschweißen zu bevorzugen.

Beim Verschweißen von Bauelementen, die anschließend im miteinander verschweißten Zustand eine definierte Länge und/oder Anschweißwinkelneigung aufweisen müssen, ist ein besonderer Aufwand notwendig, um die vorgesehene Länge und die Anschweißwinkelneigung zuverlässig einzuhalten.

Beim Gerüstbau werden bei den Gerüsten bzw. bei den Modul-Gerüsten regelmäßig sogenannte Horizontalriegel bzw. Modul-Horizontalriegel eingesetzt, die zwei vertikal angeordnete Gerüstrahmen oder allgemein vertikal verlaufende Gerüststützen, insbesondere Vertikalstiele bzw. Modul-Vertikalstiele, miteinander verbinden. Derartige Horizontalriegel weisen ein Riegelrohr auf, an dessen beiden stirnseitigen Enden jeweils ein Riegelkopf angeschweißt ist. Das Riegelrohr mit den angeschweißten Riegelköpfen muss dabei eine definierte Länge aufweisen, um zwei vertikal angeordnete Gerüstrahmen bzw. zwei vertikal verlaufende Gerüststützen miteinander definiert verbinden zu können. Ferner müssen die Riegelköpfe in einem definierten Anschweißwinkel bzw. mit einer definierten Neigung an das Riegelrohr angeschweißt werden, damit die Riegelköpfe zuverlässig mit dem jeweiligen Gerüstrahmen bzw. den Gerüststützen verbunden, insbesondere in dort angebrachte Lochscheiben eingesetzt werden können. Anschließend werden die Riegelköpfe in der Lochscheibe jeweils mittels eines Keils fixiert, auch dies erfordert eine möglichst exakte und toleranzarme Verschweißung zwischen dem Riegelrohr und den Riegelköpfen. Dabei ist zu beachten, dass es sich bei dem Riegelkopf im Regelfall um ein geschmiedetes Bauelement und bei dem Riegelrohr zumeist um ein Blechteil, insbesondere ein Vierkantrohr, handelt. Das Riegelrohr kann vorzugsweise einen runden, quadratischen oder rechteckigen Querschnitt aufweisen. Bekannt sind auch Riegelrohre mit einem U-förmigen Profilquerschnitt.

Insbesondere die Riegelrohre weisen häufig Toleranzen auf, insbesondere bezüglich der Länge, aber auch bezüglich des Verlaufs der Stirnseiten, was sich auf die Anschweißwinkelneigung auswirken kann, weil die Riegelköpfe an die Stirnseiten ange-schweißt werden.

Ferner kann es, insbesondere bei den Riegelrohren, vorkommen, dass diese an den Stirnseiten Toleranzen derart aufweisen, dass die Dicke des Materials nicht gleichmäßig ist, wodurch es beim Laserschweißen dazu kommen kann, dass nicht ausreichend viel Material zum Verschweißen vorhanden ist.

Es treten somit aus den vorgenannten Gründen bei fertigverschweißten Horizontalriegeln, die sich aus einem Riegelrohr und einem oder auch zwei Riegelköpfen zusammensetzen, immer wieder ungewünschte Längentoleranzen und auch Anschweißwinkelabweichungen auf. Der fertigverschweißte Horizontalriegel muss einer genauen Prüfung unterzogen werden, insbesondere hinsichtlich der Schweißqualität sowie der Gesamtlänge des Horizontalriegels und des Anschweißwinkels, mit dem der oder die Riegelköpfe an das Riegelrohr angeschweißt sind.

Der vorliegenden Erfindung liegt die Aufgabe zugrunde, ein Verfahren zum Verschweißen eines ersten Bauelements mit einem zweiten Bauelement mittels einer Lasereinrichtung zur Verfügung zu stellen, welches die Nachteile des Standes der Technik löst, insbesondere ein zuverlässiges Schweißergebnis sicherstellt und Längen- bzw. Anschweißwinkeltoleranzen möglichst vermeidet.

Unter einer Toleranz ist hierbei jegliche Abweichung eines tatsächlichen Wertes von einem Zielwert zu verstehen.

Diese Aufgabe wird erfindungsgemäß durch die Merkmale des Anspruchs 1 gelöst.

Der vorliegenden Erfindung liegt ferner die Aufgabe zugrunde, eine Vorrichtung zum Verschweißen eines ersten Bauelement mit einem zweiten Bauelement zur Verfügung zu stellen, mit der die Bauelemente zuverlässig verschweißt werden können, insbesondere unter Einhaltung von Längenvorgaben und Anschweißwinkeln zwischen den zu verschweißenden Bauelementen.

Diese Aufgabe wird erfindungsgemäß durch eine Vorrichtung mit den Merkmalen des Anspruchs 12 gelöst.

Der vorliegenden Erfindung liegt ferner die Aufgabe zugrunde, einen Horizontalriegel, insbesondere für ein Gerüst, aufweisend ein Riegelrohr, wobei an wenigstens einer Stirnseite ein Riegelkopf angeschweißt ist, zur Verfügung zu stellen, bei dem die Schweißverbindung zwischen dem Riegelrohr und dem Riegelkopf möglichst zuverlässig und exakt hergestellt ist.

Diese Aufgabe wird erfindungsgemäß durch einen Horizontalriegel, insbesondere für ein Gerüst, mit den Merkmalen des Anspruchs 15 gelöst.

Das erfindungsgemäße Verfahren zum Verscheißen eines ersten Bauelements mit einem zweiten Bauelement mittels einer Lasereinrichtung sieht vor, dass das erste Bauelement und das zweite Bauelement zum Verschweißen in Kontakt zueinander gebracht werden. Erfindungsgemäß ist dabei vorgesehen, dass alle Kontaktflächen des ersten Bauelements und/oder des zweiten Bauelements zwischen dem ersten Bauelement und dem zweiten Bauelement gleichzeitig mittels der Lasereinrichtung erhitzt und plastisch erweicht werden, wonach das erste Bauelement und das zweite Bauelement aufeinandergepresst werden, und eine um die Kontaktflächen umlaufende Stoßkante zwischen dem ersten Bauelement und dem zweiten Bauelement unter Ausbildung einer Schweißnaht wenigstens entlang eines Abschnitts mittels der Lasereinrichtung verschweißt wird.

Eine Lasereinrichtung umfasst einen sogenannten Laser, d.h. ein Gerät, mit dem Laserstrahlen erzeugt werden. Das Schweißen mittels Laser ist ein Verfahren bei welchem energiereiches Laserlicht als Wärmequelle verwendet wird.

Laserstrahlen sind elektromagnetische Wellen. Vom Licht einer zur Beleuchtung verwendeten Lichtquelle, beispielsweise einer Glühlampe, unterscheiden sie sich vor allem durch die sonst unerreichte Kombination von hoher Intensität, oft sehr engem Frequenzbereich (monochromatisches Licht), scharfer Bündelung des Strahls und großer Kohärenzlänge. Auch sind, bei sehr weitem Frequenzbereich, extrem kurze und intensive Strahlpulse mit exakter Wiederholfrequenz möglich.

Laser werden unter anderem als Schneid- und Schweißwerkzeuge eingesetzt.

Laser gibt es für Strahlungen in verschiedenen Bereichen des elektromagnetischen Spektrums: von Mikrowellen (Maser) über Infrarot, sichtbares Licht, Ultraviolett bis hin zu Röntgenstrahlung. Die besonderen Eigenschaften der Laserstrahlen entstehen durch ihre Erzeugung in Form einer stimulierten Emission. Laser arbeiten wie ein optischer Verstärker, typischerweise in resonanter Rückkopplung. Die dazu erforderliche Energie kann von einem Lasermedium (bspw. Kristall, Gas oder Flüssigkeit) bereitgestellt werden, in dem aufgrund äußerer Energiezufuhr eine Besetzungsinversion herrscht. Die resonante Rückkopplung entsteht in der Regel dadurch, dass das Lasermedium sich in einem elektromagnetischen Resonator für die Strahlung bestimmter Richtung und Wellenlänge befindet.

Erfindungsgemäß ist vorgesehen, dass alle Kontaktflächen des ersten Bauelements oder alle Kontaktflächen des zweiten Bauelements oder alle Kontaktflächen des ersten und des zweiten Bauelements, die sich zwischen dem ersten Bauelement und dem zweiten Bauelement befinden, gleichzeitig mittels der Lasereinrichtung erhitzt und plastisch erweicht werden. Zumindest nachdem die Kontaktflächen plastisch erweicht sind, werden das erste Bauelement und das zweite Bauelement aufeinandergepresst. Durch das plastische Erweichen der Kontaktflächen des ersten Bauelements und/oder des zweiten Bauelements lassen sich die Bauelemente aufgrund der Presskraft zusammenpressen, vorzugsweise derart, dass sich die Bauelemente aufeinander zu bewegen. Es kann hierfür ausreichend sein, wenn die Kontaktflächen eines der beiden Bauelemente plastisch erweicht werden. Dies ist bereits ausreichend, um die beiden Bauelemente zusammenzupressen, vorzugsweise ein Wegstück, insbesondere ein definiertes Wegstück, aufeinander zu zu bewegen, insbesondere geringfügig aufeinander zu zu bewegen.

Die Erfinder haben erkannt, dass ein plastisches Erweichen der Kontaktflächen und ein Zusammenpressen der Bauelemente erhebliche Vorteile hat. Zum einen wird dadurch sichergestellt, dass beim anschließenden Verschweißen einer Stoßkante zwischen dem ersten Bauelement und dem zweiten Bauelement ausreichend viel Material zum Verschweißen vorhanden ist und nicht aufgrund von Toleranzen eines oder beider Bauelemente zu wenig Material zur Erzeugung einer vorteilhaften Schweißnaht vorhanden ist. Zum anderen haben die Erfinder erkannt, dass sich durch das erfindungsgemäße Verfahren Längentoleranzen und auch Anschweißwinkelabweichungen ausgleichen lassen. Durch das plastische Erweichen wenigstens der Kontaktflächen eines der Bauelemente bzw. der Fügepartner lässt sich sowohl die Gesamtlänge der beiden zu verschweißenden Bauelemente als auch der Anschweißwinkel, unter dem diese verschweißt werden, einstellen bzw. korrigieren, so dass die beiden fertigverschweißten Bauelemente sowohl die gewünschte Gesamtlänge als auch einen gewünschten Anschweißwinkel, unter dem die beiden Bauelemente verschweißt sind, aufweisen.

Das erfindungsgemäße Verfahren lässt sich mit Bauelementen mit gleichen oder unterschiedlichen Dicken durchführen. Bei den Bauelementen bzw. einem der Bauelemente kann es sich zum Beispiel um ein Blech, insbesondere ein gebogenes Blech, insbesondere ein Vierkantrohr oder ein Rohr mit einem beliebigen Querschnitt, beispielsweise rund, rechteckig, quadratisch oder auch mit einem U-Profil, handelt. Bei den Bauelementen bzw. bei dem anderen Schweißpartner kann es sich auch um ein geschmiedetes Bauelement handeln.

Durch das erfindungsgemäße Verfahren werden sogenannte Dickenverluste der vorzugsweise aus Blech hergestellten Bauelemente vermieden. Ferner wird die Schweißnaht durch die Presskraft bzw. den Druck, mit dem die beiden Bauelemente aufeinandergepresst werden bzw. aufeinander gedrückt werden, verbessert. Mögliche toleranzbedingte Dickenverluste werden durch das Aufeinanderpressen der Bauelemente entsprechend ausgeglichen.

Das erfindungsgemäße Verfahren sieht vor, dass alle Kontaktflächen eines der beiden Verbindungspartner aufgeschmolzen werden, so dass keine "Hindernisse" bzw. Vorsprünge verbleiben, die ein Aufeinanderpressen der Bauelemente behindern, insbesondere eine Bewegung der Bauelemente aufeinander zu.

Es kann vorgesehen sein, dass beide Bauelemente aufeinander zu bewegt werden. Zu bevorzugen ist es allerdings, wenn eines der Bauelemente als Anschlag fungiert und das andere Bauelement auf diesen Anschlag aufgepresst wird.

Das erfindungsgemäße Verfahren ist nicht nur vorteilhaft, um möglicherweise fehlendes Material beim Schweißen auszugleichen, sondern verbessert grundsätzlich den Schweißprozess, da durch ein Aufeinanderpressen die Materialmenge entlang der Stoßkante zwischen dem ersten Bauelement und dem zweiten Bauelement, an der die Verschweißung erfolgen soll, erhöht wird.

Unter dem Begriff, dass die Lasereinrichtung alle Kontaktflächen gleichzeitig erhitzt und plastisch erweicht, ist zu verstehen, dass die plastische Erweichung im Wesentlichen gleichzeitig durch ein Erhitzen mittels der Lasereinrichtung erfolgt, vorzugsweise derart, dass der Laserstrahl der Lasereinrichtung simultan oder quasi-simultan auf alle Kontaktflächen mit dem Ergebnis einwirkt, dass die Bauelemente aufgrund der Presskraft zusammengeschoben werden können, ohne dass Vorsprünge oder Elemente eines der Bauelemente dem anderen Bauelement beim Zusammenpressen im Weg stehen, insbesondere verhindern, dass sich die Bauelemente geringfügig aufeinander zu bewegen können.

Das Verfahren soll ferner derart durchgeführt werden, dass nicht bereits entlang eines Abschnitts der Stoßkante zwischen dem ersten und dem zweiten Bauelement eine Verschweißung erfolgt, bevor der Verfahrensschritt des Zusammenpressens derart, dass die fertigverschweißten Bauelemente die gewünschte Gesamtlänge und den gewünschten Anschweißwinkel aufweisen, abgeschlossen ist.

Erfindungsgemäß ist vorzugsweise vorgesehen, dass die Lasereinrichtung mehrere Laserstrahlen erzeugt, vorzugsweise über mehrere Laser bzw. Laserquellen verfügt, die derart zusammenwirken, dass alle Kontaktflächen des ersten Bauelements und/oder des zweiten Bauelements gleichzeitig erhitzt werden können. Es kann dabei auch vorgesehen sein, dass die Lasereinrichtung oder einzelne Laser der Lasereinrichtung rotiert bzw. gedreht bzw. oszilliert werden. Alternativ oder ergänzend kann auch vorgesehen sein, dass die miteinander zu verschweißenden Bauelemente rotiert bzw. gedreht bzw. oszilliert werden.

Von Vorteil ist es, wenn das erste Bauelement und das zweite Bauelement derart aufeinandergepresst werden, dass sich das erste Bauelement und das zweite Bauelement aufeinander zu bewegen.

Es hat sich als besonders geeignet herausgestellt, wenn das Aufeinanderpressen der Bauelemente derart erfolgt, dass sich die Bauelemente, vorzugsweise nur geringfügig, aufeinander zu bewegen, vorzugsweise 0,4 mm bis 8 mm, insbesondere 0,5 mm bis 6 mm, bevorzugt 1 mm bis 4 mm, besonders bevorzugt 1,5 mm bis 3 mm.

Von Vorteil ist es, wenn die Lasereinrichtung zur Durchführung eines laserbasierten Pressstumpfschweißens eingerichtet ist.

Die Verwendung eines laserbasierten Pressstumpfschweißens hat sich für das durchzuführende erfindungsgemäße Verfahren als besonders geeignet herausgestellt. Es kann dabei vorgesehen sein, dass die Lasereinrichtung über mehrere Laser bzw. Laserquellen verfügt.

Erfindungsgemäß kann ferner vorgesehen sein, dass die Lasereinrichtung einen Laserstrahl mit einer Linienbreite erzeugt, der alle Kontaktflächen des ersten Bauelements und/oder des zweiten Bauelements zwischen dem ersten Bauelement und dem zweiten Bauelement gleichzeitig erweicht und/oder sich über die gesamte Länge der um die Kontaktflächen umlaufenden Stoßkante zwischen dem ersten Bauelement und dem zweiten Bauelement erstreckt.

Grundsätzlich kann ein gleichzeitiges Erhitzen aller Kontaktflächen des ersten Bauelements oder des zweiten Bauelements oder des ersten Bauelements und des zweiten Bauelements auf verschiedene Art mittels der Lasereinrichtung erfolgen. Hierzu können entsprechende Spiegel und/oder mehrere Laser bzw. Laserquellen und/oder eine entsprechend schnelle Oszillation des Laserstrahls vorgesehen sein.

Es hat sich als besonders geeignet herausgestellt, wenn die Lasereinrichtung einen Laserstrahl mit einer Linienbreite erzeugt, der alle Kontaktflächen gleichzeitig erweicht und/oder sich über die gesamte Länge der Stoßkante zwischen dem ersten Bauelement und dem zweiten Bauelement erstreckt. Ein Laserstrahl mit einer Linienbreite, der sich über alle Kontaktflächen erstreckt, ermöglicht es in besonders vorteilhafter Weise, alle Kontaktflächen gleichzeitig zu erweichen. Ferner ermöglicht ein Laserstrahl, der sich über die gesamte Länge der um die Kontaktflächen umlaufenden Stoßkante zwischen dem ersten Bauelement und dem zweiten Bauelement erstreckt, dass anschließend auch eine Verschweißung, zum Beispiel über mehrere Abschnitte der gesamten Stoßkante oder vorzugsweise durchgehend über die gesamte Stoßkante, erfolgen kann.

Die Kontaktflächen werden vorzugsweise dadurch erhitzt und plastisch erweicht, dass der Laserstrahl die Stoßkante zwischen den beiden Bauelementen vollständig umschließt bzw. der Laserstrahl um den Außenumfang der Kontaktflächen vollständig umlaufend geschlossen ist.

Von Vorteil ist es, wenn das erste Bauelement und das zweite Bauelement über die gesamte Länge der um die Kontaktflächen umlaufenden Stoßkante miteinander verschweißt werden.

Durch eine Verschweißung über die gesamte Länge der Stoßkante entsteht eine besonders geeignete und dauerhaft zuverlässige Schweißverbindung zwischen den beiden Bauelementen.

Von Vorteil ist es ferner, wenn das erste Bauelement und/oder das zweite Bauelement mit einem Übermaß hergestellt wird, derart, dass eine IST-Gesamtlänge der Bauelemente, wenn diese vor dem Verfahrensschritt des Erhitzens in Kontakt zueinander gebracht werden, größer ist als eine SOLL-Gesamtlänge, die die beiden miteinander verschweißten Bauelemente nach Abschluss des Verfahrens aufweisen sollen.

Es hat sich als besonders geeignet zur Durchführung des Verfahrens herausgestellt, wenn das erste Bauelement und/oder das zweite Bauelement mit einem Übermaß hergestellt wird. Dadurch ist es möglich, die Bauelemente zusammenzupressen, insbesondere die Bauelemente, vorzugsweise nur geringfügig, aufeinander zu zu bewegen, so dass ausreichend Material im Bereich der Stoßkante zum Verschweißen vorhanden ist, Anschweißwinkelabweichungen zwischen den Bauelementen korrigiert werden können und ferner eine gewünschte SOLL-Gesamtlänge eingestellt werden kann. Das Übermaß, welches wenigstens eines der Bauelemente aufweist, ist vorzugsweise derart gewählt, dass die IST-Gesamtlänge vor dem Verfahrensschritt des Erhitzens bzw. des plastischen Erweichens, auch beim Auftreten von Toleranzen, größer ist als die SOLL-Gesamtlänge, so dass die Bauelemente auch nach dem Zusammenpressen noch eine gewünschte SOLL-Gesamtlänge aufweisen bzw. diese nicht unterschritten wird.

Es hat sich gezeigt, dass es ausreichend ist, wenn eines der Bauelemente mit einem Übermaß hergestellt wird, vorzugsweise das Bauelement, das ohnehin die größere

Toleranz aufweist. Wenn es sich bei einem der Bauelemente um ein geschmiedetes Bauelement handelt und bei dem anderen Bauelement um ein Blech, insbesondere in Rohrform, hat es sich als geeignet herausgestellt, das Bauelement, das aus dem Blech hergestellt ist, mit einem Übermaß herzustellen.

Das Übermaß, das eines der Bauelemente oder beide Bauelemente gemeinsam aufweisen, beträgt vorzugsweise 0,4 mm bis 8 mm, insbesondere 0,5 mm bis 6 mm, bevorzugt 1 mm bis 4 mm, besonders bevorzugt 1,5 mm bis 3 mm.

Nachfolgend wird ein vorteilhafter Verfahrensablauf dargestellt mit dem erreicht werden soll, dass die beiden Bauelemente, ausgehend von einer IST-Gesamtlänge, anschließend eine SOLL-Gesamtlänge aufweisen. Alternativ, vorzugsweise jedoch ergänzend, wird der nachfolgend beschriebene Verfahrensablauf derart durchgeführt, dass auch ein gewünschter SOLL-Anschweißwinkel erreicht wird, wozu vorzugsweise zunächst ein IST-Anschweißwinkel bestimmt wird. Zur Erreichung eines SOLL-Anschweißwinkels können die nachfolgend dargestellten Verfahrensschritte analog eingesetzt werden.

Erfindungsgemäß kann ferner vorgesehen sein, dass die IST-Gesamtlänge der Bauelemente während der Durchführung des Verfahrens erfasst wird, wonach der Verfahrensschritt des Erhitzens und des plastischen Erweichens so lange bzw. verlängert und/oder erneut durchgeführt wird und/oder der Verfahrensschritt des Aufeinanderpressens so lange bzw. verlängert und/oder verstärkt bzw. mit erhöhtem Druck durchgeführt wird, bis die IST-Gesamtlänge der Bauelemente die SOLL-Gesamtlänge erreicht hat.

Es hat sich als besonders geeignet herausgestellt, wenn während des Verfahrens die IST-Gesamtlänge, wie vorstehend beschrieben, erfasst bzw. kontrolliert wird, so dass der Verfahrensschritt des Erhitzens und des plastischen Erweichens bzw. der Verfahrensschritt des Aufeinanderpressens entsprechend angepasst bzw. so lange bzw. verlängert und/oder verstärkt und/oder erneut durchgeführt werden kann, bis die IST-Gesamtlänge der Bauelemente der gewünschten SOLL-Gesamtlänge entspricht.

Es kann insbesondere vorgesehen sein, dass zwei- oder mehrfach oder entsprechend verlängert eine Erhitzung durch die Lasereinrichtung erfolgt, so dass die Kontaktflächen so lange plastisch erweicht bzw. zusammengepresst werden, insbesondere derart, dass sich die beiden Bauelemente aufeinander zu bewegen, bis die SOLL-Gesamtlänge erreicht wird.

Es hat sich als vorteilhaft herausgestellt, wenn die Druckkraft bzw. die Presskraft, mit der die Bauelemente aufeinandergepresst werden, konstant gehalten wird. Damit lässt sich besonders vorteilhaft der Sollweg aufgrund des vorhandenen Übermaßes einstellen.

Vorzugsweise werden die Bauelemente so lange aufeinandergepresst bzw. die Drucckraft so lange aufgebracht, bis die gewünschte SOLL-Gesamtlänge erreicht ist.

Die Erfassung der IST-Gesamtlänge erfolgt vorzugsweise kontinuierlich.

Von Vorteil ist es, wenn wenigstens eines der Bauelemente wenigstens eine definierte Bohrung, vorzugsweise mehrere in Längsrichtung zueinander versetzte Bohrungen, aufweist, die als Referenz zur Positionierung der Bauelemente zur Durchführung des Verfahrens verwendet wird und/oder die zur Feststellung der IST-Gesamtlänge verwendet wird.

Die Positionierung der beiden Bauelemente zueinander kann grundsätzlich auf beliebige Art und Weise erfolgen. Es hat sich jedoch als vorteilhaft herausgestellt, wenn wenigstens eines der Bauelemente wenigstens eine, vorzugsweise mehrere, definierte Bohrungen aufweist, die als Referenz zur Positionierung verwendet werden können. Es kann dabei vorgesehen sein, dass die Bohrungen verwendet werden, um das Bauelement auf Position zu halten, während das andere Bauelement zugeführt und angepresst wird. Es kann aber auch vorgesehen sein, dass das mit den Bohrungen versehene Bauelement an das andere Bauelement, welches in diesem Fall als Anschlag fungieren kann, zugestellt und angepresst wird. Möglich ist es auch, dass beide Bauelemente über entsprechende Bohrungen verfügen, so dass die Bauelemente definiert zusammengeführt werden können.

Es hat sich gezeigt, dass die Bohrungen definiert in die Bauelemente eingebracht werden können und in ihrer Position vergleichsweise toleranzunabhängig sind, so dass die Bohrungen einen guten Referenzpunkt für die Bestimmung der SOLL-Gesamtlänge darstellen. Die Bohrungen können benutzt werden um die SOLL-Gesamtlänge mittels der SOLL-Anschlusslänge zu bestimmen.

Vorzugsweise weist die Einrichtung, die die Bauelemente zusammenführen soll bzw. die diese aneinander anpresst, Bolzen oder Vorsprünge auf, die in die Bohrungen, vorzugsweise formschlüssig, eindringen.

Alternativ zur Ausbildung von Bohrungen können auch Bolzen oder andere Anschläge vorgesehen sein.

Erfindungsgemäß kann ferner vorgesehen sein, dass alle Kontaktflächen zwischen dem ersten Bauelement und dem zweiten Bauelement dadurch gebildet werden, dass eine erste Stirnseite des ersten Bauelements und eine Stirnseite des zweiten Bauelements miteinander in Kontakt gebracht werden.

Es hat sich als besonders geeignet herausgestellt, wenn die Bauelemente stirnseitig miteinander verbunden werden derart, dass alle Kontaktflächen zwischen dem ersten Bauelement und dem zweiten Bauelement an den jeweils aufeinander ausgerichteten Stirnseiten der Bauelemente ausgebildet sind.

Die aufeinander ausgerichteten Stirnseiten der beiden Bauelemente werden somit gegeneinander gepresst.

Vorzugsweise handelt es sich bei wenigstens einem der Bauelemente um ein Rohr mit einem beliebigen Querschnitt, bei dem es sich auch um ein U-Profil handeln kann. Auf eine erste Stirnseite des Rohrs wird dann das zweite Bauelement aufgeschweißt wird, welches vorzugsweise eine Stirnseite aufweist, die entsprechend korrespondierend zu der ersten Stirnseite des Rohrs gestaltet ist.

Erfindungsgemäß kann ferner vorgesehen sein, dass die erste Stirnseite des ersten Bauelements und die Stirnseite des zweiten Bauelements vor dem Verschweißen formschlüssig miteinander verbunden, vorzugsweise zusammengesteckt, werden.

Es hat sich als besonders geeignet herausgestellt, wenn die beiden Bauelemente mit deren Stirnseiten vor dem Verschweißen formschlüssig, das heißt mechanisch, zusammengesteckt werden. Dadurch lässt sich der Schweißprozess präziser und definierter durchführen. Vorzugsweise ist der Formschluss dabei derart gestaltet, dass eine Ausrichtung der Bauelemente zueinander, insbesondere ein Anschlusswinkel, mit dem die Bauelemente aufeinandertreffen, noch korrigierbar ist.

Erfindungsgemäß kann ferner vorgesehen sein, dass das erste Bauelement ausgehend von der ersten Stirnseite einen sich nach innen erstreckenden Hohlraum aufweist, der wenigstens abschnittsweise von einer Wandung umgeben ist, wobei ein an der Stirnseite des zweiten Bauelements ausgebildeter Vorsprung vor dem Verschweißen in den Hohlraum eingesteckt wird.

Es hat sich gezeigt, dass sich das erfindungsgemäße Verfahren besonders vorteilhaft bei zwei Bauelementen einsetzen lässt, die, wie vorstehend beschrieben, gestaltet sind. Der Vorsprung des zweiten Bauelements lässt sich dabei in besonders vorteilhafter Weise in das erste Bauelement einstecken, vorzugsweise derart, dass der Vorsprung innenseitig an der Wandung des ersten Bauelements, welche den Hohlraum umgibt, anliegt. Es kann sich bei dem ersten Bauelement insbesondere um ein Rohr handeln. Die Wandung des ersten Bauelements muss dabei nicht umlaufend geschlossen ausgebildet sein. Es kann sich insbesondere auch um eine Wandung handeln, die im Querschnitt nur ein U-Profil aufweist oder die über Aussparungen verfügt, die insbesondere derart, wie dies bei Riegelrohren der Fall ist, an die Riegelköpfe stirnseitig angeschweißt werden.

Von Vorteil ist es, wenn das erste Bauelement ein Rohr, insbesondere ein Riegelrohr, insbesondere eines Horizontalriegels für ein Gerüst, ist und/oder das zweite Bauelement ein Verbindungselement, insbesondere ein Riegelkopf, insbesondere ein Riegelkopf eines Horizontalriegels für ein Gerüst, ist.

Es hat sich als besonders geeignet herausgestellt, das erfindungsgemäße Verfahren einzusetzen, wenn es sich bei dem ersten Bauelement um ein Rohr, insbesondere ein Riegelrohr bzw. einen Querriegel, insbesondere eines Horizontalriegels für ein Gerüst, handelt. Das Riegelrohr kann dabei vorzugsweise einen runden, rechteckigen, insbesondere quadratischen Querschnitt aufweisen. Das Riegelrohr kann auch einen Querschnitt aufweisen, der einem U-Profil angenähert ist, wobei die freien Schenkel des U-Profils, insbesondere nach innen, vorzugsweise zweifach, abgewinkelt sein können. Bei dem Riegelrohr kann es sich auch um ein Mehrkant-, insbesondere ein Vierkantrohr, handeln.

Es hat sich gezeigt, dass sich das erfindungsgemäße Verfahren in besonderer Weise eignet, wenn das zweite Bauelement ein Verbindungselement, insbesondere ein Riegelkopf, insbesondere ein Riegelkopf eines Horizontalriegels für ein Gerüst ist.

Das erfindungsgemäße Verfahren eignet sich in besonderer Weise zur Herstellung eines Horizontalriegels für ein Gerüst. Dabei können derartige Horizontalriegel an beiden Enden des Riegelrohrs über einen Riegelkopf verfügen oder auch nur an einem Ende.

Erfindungsgemäß kann ferner vorgesehen sein, dass eine zweite Stirnseite des ersten Bauelements mit einer Stirnseite eines dritten Bauelements in Kontakt gebracht wird, wonach alle Kontaktflächen des ersten Bauelements und/oder des dritten Bauelements zwischen dem ersten Bauelement und dem dritten Bauelement gleichzeitig mittels der Lasereinrichtung oder einer zweiten Lasereinrichtung erhitzt und plastisch erweicht werden, wonach das erste Bauelement und das dritte Bauelement aufeinandergepresst werden, und eine um die Kontaktflächen umlaufende Stoßkante zwischen dem ersten Bauelement und dem dritten Bauelement wenigstens entlang eines Abschnitt mittels der Lasereinrichtung oder der zweiten Lasereinrichtung verschweißt wird.

Es hat sich als besonders geeignet herausgestellt, wenn das erfindungsgemäße Verfahren derart gestaltet ist, dass das erste Bauelement an beiden stirnseitigen Enden mit einem zweiten bzw. einem dritten Bauelement verschweißt wird. Es eignet sich in besonderer Weise, wenn das erfindungsgemäße Verfahren auch auf die Kontaktflächen zwischen dem ersten Bauelement und dem dritten Bauelement angewendet wird. Es kann auch in diesem Fall vorgesehen sein, dass nur die Kontaktflächen des ersten Bauelements, die auf das dritte Bauelement kontaktieren, oder nur die Kontaktflächen des dritten Bauelements, die das erste Bauelement kontaktieren, oder alle Kontaktflächen zwischen dem ersten Bauelement und dem dritten Bauelement mittels der Lasereinrichtung erhitzt und plastisch erweicht werden. Es kann sich dabei um die Lasereinrichtung handeln, die auch die Kontaktflächen zwischen dem ersten Bauelement und dem zweiten Bauelement erhitzt oder um eine zweite Lasereinrichtung. Eine zweite Lasereinrichtung eignet sich insbesondere dann, wenn das zweite Bauelement und das dritte Bauelement gleichzeitig bzw. nahezu gleichzeitig aufgeschweißt werden sollen.

Es hat sich als vorteilhafter herausgestellt, wenn nur eine Lasereinrichtung vorgesehen ist. Insbesondere ist es von Vorteil, wenn zuerst das zweite Bauelement auf das erste Bauelement aufgeschweißt wird und anschließend das dritte Bauelement auf das erste Bauelement aufgeschweißt wird. Hierzu eignet es sich, das erste Bauelement entsprechend zu rotieren, so dass dieselbe Lasereinrichtung, ohne dass diese bewegt werden muss, zum Verschweißen des dritten Bauelements eingesetzt werden kann. Dies hat insbesondere auch den Vorteil, dass das erfindungsgemäße Verfahren, ohne dass größere Umrüstungen notwendig sind, für Bauelemente mit unterschiedlichen Längen verwendet werden kann. Es kann beispielsweise ein erstes Bauelement, bei dem es sich um ein Rohr mit 1 m Länge handelt, mit derselben Einrichtung mit einem zweiten Bauelement verschweißt werden, wie ein Rohr mit einer Länge von 3 m. Die zweite Stirnseite eines derartigen ersten Bauelements kann durch einfache Rotation von derselben Lasereinrichtung erhitzt und plastisch aufgeweicht werden.

Von Vorteil ist es, wenn das erste Bauelement und das dritte Bauelement derart aufeinandergepresst werden, dass sich die das erste Bauelement und das dritte Bauelement aufeinander zu bewegen.

Vorzugsweise werden das erste Bauelement und das dritte Bauelement nur geringfügig aufeinander zu bewegt.

Hinsichtlich möglicher Ausgestaltungen der Verschweißung der zweiten Stirnseite des ersten Bauelements mit der Stirnseite des dritten Bauelements wird auf die Ausführungen zur Verschweißung des ersten Bauelements mit dem zweiten Bauelement verwiesen.

Von Vorteil ist es, wenn das dritte Bauelement ein Verbindungselement, insbesondere ein Riegelkopf, insbesondere ein zweiter Riegelkopf eines Horizontalriegels für ein Gerüst, ist.

Das erfindungsgemäße Verfahren eignet sich in besonderer Weise, wenn das erste Bauelement und das zweite Bauelement und/oder das dritte Bauelement aus Metall, insbesondere aus, vorzugsweise beschichtetem, Stahl oder Aluminium bestehen.

Von besonderem Vorteil ist die Anwendung des erfindungsgemäßen Verfahrens bei Bauelementen aus Aluminium, weil sich dort durch das erfindungsgemäße Verfahren die Ausbreitung und Auswirkung der Wärmeeinflusszone reduzieren lässt.

Die Erfindung betrifft ferner eine Vorrichtung zum Verschweißen eines ersten Bauteils mit einem zweiten Bauteil.

Die erfindungsgemäße Vorrichtung zum Verschweißen eines ersten Bauelements mit einem zweiten Bauelement weist eine Kontakteinrichtung auf, um das erste Bauelement und das zweite Bauelement miteinander in Kontakt zu bringen. Die erfindungsgemäße Vorrichtung weist ferner eine Lasereinrichtung auf, um das erste Bauelement und das zweite Bauelement miteinander zu verschweißen. Erfindungsgemäß ist vorgesehen, dass die Lasereinrichtung eingerichtet ist, alle Kontaktflächen des ersten Bauelements und/oder des zweiten Bauelements zwischen dem ersten Bauelement und dem zweiten Bauelement gleichzeitig zu erhitzen und plastisch zu erweichen. Die Kontakteinrichtung ist eingerichtet, das erste Bauelement und das zweite Bauelement aufeinanderzupressen. Die Lasereinrichtung ist ferner eingerichtet, um eine um die Kontaktflächen umlaufende Stoßkante zwischen dem ersten Bauelement und dem zweiten Bauelement unter Ausbildung einer Schweißnaht wenigstens entlang eines Abschnitts zu verschweißen.

Durch die erfindungsgemäße Lasereinrichtung können alle Kontaktflächen des ersten Bauelements oder alle Kontaktflächen des zweiten Bauelements oder alle Kontaktflächen des ersten und des zweiten Bauelements, die sich zwischen dem ersten Bauelement und dem zweiten Bauelement befinden, gleichzeitig erhitzt und plastisch erweicht werden. Hierdurch stellen sich die Effekte ein, die bereits bezüglich des erfindungsgemäßen Verfahrens entsprechend beschrieben wurden.

Die erfindungsgemäß vorgesehene Kontakteinrichtung presst dabei das erste Bauelement und das zweite Bauelement aufeinander, vorzugsweise derart, dass diese gestaucht werden bzw. dass zumindest eines der Bauelemente, insbesondere das dünnere Bauelement, gestaucht wird. Die Lasereinrichtung ist dabei eingerichtet, um eine um die Kontaktflächen umlaufende Stoßkante zwischen dem ersten Bauelement und dem zweiten Bauelement unter Ausbildung einer Schweißnaht wenigstens entlang eines Abschnitts zu verschweißen.

Durch die erfindungsgemäße Vorrichtung werden die Probleme, die im Stand der Technik beim Verschweißen eines ersten Bauelements und eines zweiten Bauelements aufgetreten sind, gelöst. Insbesondere wird durch die erfindungsgemäße Lösung sichergestellt, dass ausreichend Material zum Verschweißen der beiden Bauelemente im Bereich der Stoßkante vorhanden ist. Ferner lassen sich durch die erfindungsgemäße Vorrichtung Längentoleranzen ausgleichen derart, dass die fertigverschweißten Bauelemente die vorgesehene Länge und vorzugsweise einen gewünschten Anschweißwinkel aufweisen. Eine entsprechende Längenkorrektur kann durch die Kontakteinrichtung erfolgen sowie durch das gleichzeitige plastische Erweichen der Kontaktflächen durch die Lasereinrichtung. Dadurch lassen sich auch Anschweißwinkelabweichungen zwischen dem ersten und dem zweiten Bauelement entsprechend ausgleichen.

Die Kontakteinrichtung dient sowohl dazu, die beiden Bauelemente in Kontakt miteinander zu bringen, als auch dazu, diese aufeinander zu pressen bzw. aufeinander zu drücken. Die Kontakteinrichtung kann auch derart gestaltet sein, dass das Zusammenführen der beiden Bauelemente und das Zusammenpressen der Bauelemente durch verschiedene Teileinrichtungen erfolgt, beispielsweise dadurch, dass eine Teileinrichtung die Bauelemente zueinander positioniert und gegebenenfalls dafür sorgt, dass sich diese kontaktieren, und die zweite Teileinrichtung die Press- bzw. Druckkraft aufbringt bzw. für eine Kontaktierung sorgt. Es kann sich dabei auch um räumlich und/oder funktional getrennte Baugruppen bzw. Teileinrichtungen handeln, die im Rahmen der Erfindung jedoch gemeinsam als Kontakteinrichtung angesehen werden.

Beispielsweise kann als zweite Teileinrichtung zur Aufbringung der Presskraft eine Hydraulikeinrichtung vorgesehen sein.

Von Vorteil ist es, wenn die Kontakteinrichtung die Kontaktflächen des ersten Bauelements und des zweiten Bauelements derart aufeinanderpresst, dass sich das erste Bauelement und das zweite Bauelement nach der plastischen Erweichung der Kontaktflächen aufeinander zu bewegen.

Es hat sich als vorteilhaft herausgestellt, wenn die Kontakteinrichtung die Bauelemente derart aufeinanderpresst, dass sich das erste Bauelement und das zweite Bauelement nach der plastischen Erweichung bzw. Verformung der Kontaktflächen aufeinander zu bewegen, vorzugsweise jedoch nur ein kleines bzw. geringfügiges Wegstück.

Von Vorteil ist es, wenn die Lasereinrichtung zur Durchführung eines laserbasierten Pressstumpfschweißens eingerichtet ist.

Die Ausbildung der Lasereinrichtung derart, dass diese zur Durchführung eines laserbasierten Pressstumpfschweißens eingerichtet ist, hat sich als besonders geeignet herausgestellt.

Erfindungsgemäß kann ferner vorgesehen sein, dass die Lasereinrichtung eingerichtet ist, um einen Laserstrahl mit einer Linienbreite zu erzeugen, der alle Kontaktflächen des ersten Bauelements und/oder des zweiten Bauelements zwischen dem ersten Bauelement und dem zweiten Bauelement gleichzeitig plastisch erweicht und/oder dass die Lasereinrichtung eingerichtet ist, einen Laserstrahl mit einer geometrischen Linienbreite zu erzeugen, der sich über die gesamte Länge der Stoßkante zwischen dem ersten Bauelement und dem zweiten Bauelement erstreckt.

Die vorgenannte Ausgestaltung der Lasereinrichtung derart, dass der Laserstrahl eine Linienbreite aufweist, wie vorstehend erwähnt, hat sich als besonders geeignet herausgestellt. Der Laserstrahl kann dabei durch ein oder mehrere Laser und/oder geeignete Spiegel und/oder eine Oszillation des Laserstrahls erzeugt werden.

Von Vorteil ist es, wenn die Lasereinrichtung zwei oder mehrere Laser aufweist, die gemeinsam den Laserstrahl mit einer Linienbreite erzeugen derart, dass der Laserstrahl alle Kontaktflächen des ersten Bauelements und/oder des zweiten Bauelements zwischen dem ersten Bauelement und dem zweiten Bauelement gleichzeitig erweicht, und/oder derart, dass sich der Laserstrahl über die gesamte Länge der Stoßkante zwischen dem ersten Bauelement und dem zweiten Bauelement erstreckt.

Eine Ausgestaltung derart, dass die Lasereinrichtung zwei oder mehrere Laser aufweist, die gemeinsam den Laserstrahl mit der vorgenannten Linienbreite erzeugen, hat sich als besonders geeignet herausgestellt. Alternativ oder ergänzend können auch Optiken, insbesondere Spiegel, eingesetzt werden. Unabhängig von der Anzahl der verwendeten Laser kann es von Vorteil sein, wenn diese derart eingerichtet sind, dass die erzeugten Laserstrahlen mit hoher Frequenz oszillieren.

Erfindungsgemäß kann vorgesehen sein, die Lasereinrichtung eingerichtet ist um mehrere Laserstrahlen zu erzeugen, vorzugsweise über mehrere Laser bzw. Laserquellen verfügt, die derart zusammenwirken, dass alle Kontaktflächen des ersten Bauelements und/oder des zweiten Bauelements gleichzeitig erhitzbar bzw. erweichbar sind und/oder dass während des Erhitzens bzw. des Erweichens der Kontaktflächen die Lasereinrichtung oder einzelne Laser der Lasereinrichtung rotieren bzw. sich drehen bzw. oszillieren und/oder die miteinander zu verschweißenden Bauelemente rotieren bzw. sich drehen bzw. oszillieren.

Erfindungsgemäß kann ferner vorgesehen sein, dass die Lasereinrichtung eingerichtet ist, um das erste Bauelement und das zweite Bauelement über die gesamte Länge der Stoßkante miteinander zu verschweißen.

Erfindungsgemäß kann ferner vorgesehen sein, dass eine Steuereinrichtung vorgesehen ist, welche eine IST-Gesamtlänge der Bauelemente erfasst, während die Lasereinrichtung die Kontaktflächen plastisch erweicht, wobei die Steuereinrichtung die IST-Gesamtlänge und eine definierte SOLL-Gesamtlänge der Bauelemente vergleicht, wobei die SOLL-Gesamtlänge der Bauelemente kürzer ist, als die IST-Gesamtlänge der Bauelemente, wenn diese durch die Kontakteinrichtung in Kontakt zueinander gebracht sind und die Lasereinrichtung die Kontaktflächen noch nicht erhitzt hat, und wobei die Steuereinrichtung die Lasereinrichtung und/oder die Kontakteinrichtung derart steuert, dass die fertig verschweißten Bauelemente die definierte SOLL-Gesamtlänge aufweisen.

Es hat sich als besonders vorteilhaft herausgestellt, wenn eine Steuereinrichtung vorgesehen ist, die eine IST-Gesamtlänge der Bauelemente erfasst, während die Lasereinrichtung die Kontaktflächen plastisch erweicht. Das Verfahren kann dabei unabhängig davon eingesetzt werden, ob nur die Kontaktflächen des ersten Bauelements oder nur die Kontaktflächen des zweiten Bauelements oder die Kontaktflächen beider Bauelemente von der Lasereinrichtung plastisch erweicht werden. Dabei kann vorgesehen sein, dass die SOLL-Gesamtlänge der Bauelemente kürzer ist als die IST-Gesamtlänge der Bauelemente zu Beginn des Prozesses, das heißt bevor die Lasereinrichtung die Kontaktflächen erhitzt. Es ist daher vorgesehen wenigstens eines der Bauelemente mit einer Überlänge herzustellen, das heißt mit einer Länge, die größer ist als die Länge, die notwendig ist, damit die beiden Bauelemente zusammen nach Abschluss des Schweißprozesses die vorgesehene SOLL-Gesamtlänge aufweisen. Dadurch ist es möglich, dass die Bauelemente durch die Press- bzw. Druckkraft der Kontakteinrichtung zusammengeschoben bzw. gestaucht werden können, wenn die Lasereinrichtung die Kontaktflächen plastisch erweicht hat. Damit wird erreicht, dass ausreichend viel Material im Bereich der Stoßkante vorhanden ist und ferner, unabhängig von den Längentoleranzen, die miteinander verschweißten Bauelemente am Ende eine gewünschte SOLL-Gesamtlänge aufweisen. Des Weiteren können auch Anschweißwinkelabweichungen zwischen den beiden Bauelementen ausgeglichen werden.

Erfindungsgemäß kann ferner vorgesehen sein, dass wenigstens eines der Bauelemente wenigstens eine definierte Bohrung, vorzugsweise mehrere in Längsrichtung zueinander versetzte Bohrungen, als Referenz zur Positionierung der Bauelemente und/oder zur Feststellung der IST-Gesamtlänge aufweist und wobei die Kontakteinrichtung eingerichtet ist, um das wenigstens eine Bauelement mittels der wenigstens einen Bohrung definiert zu positionieren.

Es hat sich als besonders geeignet herausgestellt, wenn zur Positionierung der Bauelemente wenigstens eines der Bauelemente eine definierte Bohrung, vorzugsweise mehrere in Längsrichtung versetzt zueinander angeordnete Bohrungen aufweist, die als Referenzpunkt bzw. als Referenz zur Positionierung der Bauelemente und/oder zur Feststellung der IST-Gesamtlänge dient bzw. dienen. Eine exakte Positionierung der Bauelemente lässt sich zwar grundsätzlich auch mit anderen Methoden erreichen, beispielsweise auch dadurch, dass die Bauelemente über Absätze, Vorsprünge, Bolzen oder dergleichen verfügen. Es hat sich jedoch als besonders einfache Maßnahme herausgestellt, wenn die Bauelemente definierte Bohrungen aufweisen, deren Position exakt feststellbar ist, so dass auch die Bauelemente exakt positionierbar sind. Eine besonders vorteilhafte Positionierung ergibt sich dabei, wenn die Kontakteinrichtung eingerichtet ist, um das wenigstens eine Bauelement mittels der wenigstens einen Bohrung definiert zu positionieren. Die Kontakteinrichtung kann hierzu beispielsweise Vorsprünge, insbesondere Bolzen, aufweisen, die vorzugsweise formschlüssig in die Bohrungen eingefahren bzw. dort positioniert werden können.

Vorzugsweise weist die Kontakteinrichtung eine den Bohrungen des Bauelements entsprechende Anzahl an Bolzen auf.

Vorzugsweise weist das Bauelement drei Bohrungen auf, die sich vorzugsweise durch das Bauelement hindurch erstrecken, so dass zwei gegenüberliegende Seitenwände eines Bauelements miteinander fluchtende Bohrungen, vorzugsweise jeweils drei Bohrungen, aufweisen, wobei in jedes Paar von zwei miteinander fluchtenden Bohrungen jeweils ein entsprechender Bolzen der Kontakteinrichtung eingefahren werden kann. Möglich ist hierbei auch eine andere Anzahl von Bohrungen, beispielsweise zwei, vier, fünf, sechs oder mehr Bohrungen und eine entsprechende Anzahl von Bolzen.

Es hat sich gezeigt, dass es ausreichend sein kann, wenn eines der beiden Bauelemente über entsprechende Bohrungen. Alternativ oder ergänzend kann eines oder beide Bauelemente auch über andere Positionierungshilfen verfügen.

Die Bohrungen können derart gestaltet sein, dass diese verwendet werden können, um weitere Bauelemente, z.B. Diagonalstäbe, anzubringen. Es kann sich bei den Bohrungen die als Positionierhilfen eingesetzt werden vorzugsweise um Bohrungen zum Befestigen von weiteren Bauelementen, insbesondere von Diagonalstäben, handeln. Vorzugsweise wird eines der Bauelemente starr bzw. unbeweglich positioniert werden und dient als Anschlag für das andere Bauelement. Die feste Positionierung ist dabei im Sinne der Erfindung auch Teil der Kontakteinrichtung.

Es kann vorgesehen sein, dass die Kontakteinrichtung ein Bauelement, welches über die Bohrung verfügt, beispielsweise das erste Bauelement, zuführt, in Kontakt mit dem zweiten Bauelement, welches als Anschlag fungiert, bringt und das erste Bauelement dann an das zweite Bauelement anpresst.

Grundsätzlich ist es selbstverständlich auch möglich, dass die Kontakteinrichtung eingerichtet ist, um beide Bauelemente aufeinander zu zu bewegen, wozu gegebenenfalls auch beide Bauelemente entsprechende Bohrungen oder Positionierungshilfen aufweisen können.

Ferner kann auch vorgesehen sein, dass das als Anschlag dienende Bauelement, bei dem es sich sowohl um das erste als auch das zweite Bauelement handeln kann, mittels der Bolzen der Kontakteinrichtung, die in entsprechende Bohrungen eindringen, in Position gehalten wird.

Von Vorteil ist es, wenn die Kontakteinrichtung eingerichtet ist, um eines der Bauelemente als Anschlag zu positionieren und um das andere Bauelemente definiert gegen das als Anschlag positionierte Bauelement mit einer Presskraft (FA) zu pressen.

Von Vorteil ist es, wenn die Kontakteinrichtung eine erste Stirnseite des ersten Bauelements und eine Stirnseite des zweiten Bauelements derart miteinander in Kontakt bringt, dass zwischen der ersten Stirnseite des ersten Bauelements und der Stirnseite des zweiten Bauelements alle Kontaktflächen des ersten Bauelements und des zweiten Bauelements ausgebildet sind.

Es hat sich als besonders geeignet herausgestellt, die erfindungsgemäße Vorrichtung einzusetzen, um das erste Bauelement und das zweite Bauelement stirnseitig miteinander zu verbinden, insbesondere die Stirnseiten der beiden Bauelemente entsprechend aneinander zu pressen bzw. aufeinander zu drücken.

Von Vorteil ist es, wenn die Kontakteinrichtung ausgebildet ist, um die erste Stirnseite des ersten Bauelements und die Stirnseite des zweiten Bauelements vor dem Verschweißen formschlüssig miteinander zu verbinden, vorzugsweise zusammenzustecken.

Es hat sich als besonders geeignet herausgestellt, wenn die Kontakteinrichtung eingerichtet ist, die beiden Bauelemente vor dem Verschweißen formschlüssig miteinander zu verbinden.

Erfindungsgemäß kann ferner vorgesehen sein, dass das erste Bauelement ein Rohr, insbesondere ein Riegelrohr, insbesondere eines Horizontalriegels für ein Gerüst, ist und/oder das zweite Bauelement ein Verbindungselement, insbesondere ein Riegelkopf, insbesondere ein Riegelkopf eines Horizontalriegels für ein Gerüst, ist.

Die Erfindung eignet sich in besonderer Weise, wenn es sich bei dem ersten Bauelement um ein Rohr, insbesondere ein Riegelrohr, mit einem beliebigen Querschnitt handelt. Als Querschnittsformen eignen sich dabei insbesondere ein rechteckiger Querschnitt, ein quadratischer Querschnitt, ein runder Querschnitt oder auch ein Querschnitt, der die Form eines U-Profils aufweist, wobei die freien Enden des U-Profils vorzugsweise ein- oder mehrfach umgekantet sein können. Es eignet sich in ganz besonderer Weise, wenn das Riegelrohr Teil eines Horizontalriegels für ein Gerüst ist.

Die erfindungsgemäße Vorrichtung eignet sich ferner in besonderer Weise, wenn es sich bei dem zweiten Bauelement um ein Verbindungselement, insbesondere einen Riegelkopf, insbesondere einen Riegelkopf eines Horizontalriegels für ein Gerüst handelt.

Bei dem zweiten Bauelement handelt es sich vorzugsweise um ein geschmiedetes Bauelement.

Von Vorteil ist es, wenn die Lasereinrichtung und/oder eine zweite Lasereinrichtung eingerichtet ist, alle Kontaktflächen des ersten Bauelements und/oder eines dritten Bauelements zwischen einer zweiten Stirnseite des ersten Bauelements und einer Stirnseite des dritten Bauelements gleichzeitig zu erhitzen und plastisch zu erweichen, und wobei die Kontakteinrichtung und/oder eine zweite Kontakteinrichtung eingerichtet ist, das erste Bauelement und das dritte Bauelement aufeinanderzupressen, und die Lasereinrichtung oder die zweite Lasereinrichtung eingerichtet ist, um eine um die Kontaktflächen umlaufende Stoßkante zwischen dem ersten Bauelement und dem dritten Bauelement wenigstens entlang eines Abschnitts unter Ausbildung einer weiteren Schweißnaht zu verschweißen.

Es hat sich gezeigt, dass sich die erfindungsgemäße Vorrichtung in besonderer Weise dafür eignet, an eine erste Stirnseite des ersten Bauelements ein zweites Bauelement und an eine zweite Stirnseite des ersten Bauelements ein drittes Bauelement anzuschweißen. Dabei kann das Anschweißen des dritten Bauelements mittels der Lasereinrichtung erfolgen, mit der auch das zweite Bauelement angeschweißt wird, oder mittels der zusätzlichen zweiten Lasereinrichtung. Eine zweite Lasereinrichtung bietet sich insbesondere dann an, wenn das zweite und das dritte Bauelement zeitgleich oder im Wesentlichen zeitgleich angeschweißt werden sollen.

Es kann jedoch von Vorteil sein, wenn nur eine Lasereinrichtung eingesetzt wird und nach dem Anschweißen des zweiten Bauelements das erste Bauelement derart rotiert wird, dass mit derselben Lasereinrichtung nun das dritte Bauelement angeschweißt werden kann.

Entsprechend kann vorgesehen sein, dass die Kontakteinrichtung, die bereits das zweite Bauelement in Kontakt mit dem ersten Bauelement gebracht hat, auch dazu verwendet wird, das dritte Bauelement mit dem ersten Bauelement in Kontakt zu bringen. Alternativ kann auch hier eine zweite Kontakteinrichtung Verwendung finden.

Von Vorteil ist es, wenn nur eine Kontakteinrichtung eingesetzt wird und durch eine entsprechende Rotation des ersten Bauelements nach Abschluss des Anschweißprozesses des zweiten Bauelements nun das dritte Bauelement in Kontakt mit dem ersten Bauelement gebracht und angeschweißt wird.

Von Vorteil ist es, wenn die Kontakteinrichtung das erste Bauelement und das dritte Bauelement derart aufeinanderpresst, dass sich das erste Bauelement und das dritte

Bauelement nach der plastischen Erweichung der Kontaktflächen aufeinander zu bewegen.

Erfindungsgemäß kann ferner vorgesehen sein, dass das dritte Bauelement ein Verbindungselement, insbesondere ein Riegelkopf, insbesondere ein zweiter Riegelkopf eines Horizontalriegels für ein Gerüst, ist.

Es hat sich gezeigt, dass das erfindungsgemäße Verfahren besonders vorteilhaft einsetzbar ist, wenn es sich bei dem ersten Bauelement um ein Rohr, insbesondere ein Riegelrohr, handelt, an dessen beiden stirnseitigen Enden jeweils ein Riegelkopf, insbesondere ein Riegelkopf eines Horizontalriegels für ein Gerüst, angeschweißt wird.

Aus dem Stand der Technik sind auch Horizontalriegel bekannt, die nur über einen Riegelkopf verfügen, das heißt, es muss zur Ausbildung eines Horizontalriegels nicht an beiden Enden eines Riegelrohrs ein Riegelkopf angeschweißt werden.

Die Erfindung betrifft auch einen Horizontalriegel, insbesondere für ein Gerüst, aufweisend ein Riegelrohr, wobei an wenigstens einer Stirnseite ein Riegelkopf angeschweißt ist. Erfindungsgemäß ist dabei vorgesehen, dass der Riegelkopf mit einem Verfahren nach einem der Ansprüche 1 bis 11 an das Riegelrohr angeschweißt ist und/oder der Riegelkopf unter Verwendung einer Vorrichtung nach einem der Ansprüche 12 bis 14 an das Riegelrohr angeschweißt ist, wobei das Riegelrohr das erste Bauelement und der Riegelkopf das zweite Bauelement ist.

Es hat sich gezeigt, dass sich die erfindungsgemäße Vorrichtung und das erfindungsgemäße Verfahren insbesondere eignen, um einen Horizontalriegel, insbesondere für ein Gerüst, herzustellen. Es ist dabei zwar von Vorteil, wenn das Riegelrohr an beiden Enden jeweils mit einem Riegelkopf versehen ist. Für spezifische Anwendungen ist es jedoch auch ausreichen, wenn nur an einer Stirnseite ein Riegelkopf angeschweißt ist. Das andere Ende kann beliebig gestaltet sein. Ferner kann auch vorgesehen sein, dass nur einer der beiden Riegelköpfe mit dem erfindungsgemäßen Verfahren bzw. der erfindungsgemäßen Vorrichtung angeschweißt ist und der andere Riegelkopf mit einem herkömmlichen Schweißverfahren befestigt ist.

Merkmale, die im Zusammenhang mit einem der Gegenstände der Erfindung, namentlich gegeben durch das erfindungsgemäße Verfahren, die erfindungsgemäße Vorrichtung oder den erfindungsgemäßen Horizontalriegel, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Bei dem Gerüst handelt es sich vorzugsweise um ein Modulgerüst.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigt:
- Figur 1: ein erstes Bauelement in der Ausführungsform als Riegelrohr, an dessen stirnseitigen Enden ein zweites Bauelement bzw. ein drittes Bauelement mit dem erfindungsgemäßen Verfahren bzw. der erfindungsgemäßen Vorrichtung angeschweißt sind, wobei das zweite Bauelement und das dritte Bauelement als Riegelkopf ausgeführt sind;
- Figur 2: eine Darstellung nach Figur 1 in einer Ansicht, wobei zusätzlich ein Teil einer Kontakteinrichtung in Draufsicht dargestellt ist;

- Figur 3: eine prinzipmäßige Ausschnittsvergrößerung eines ersten Bauelements, welches mit einem zweiten Bauelement verschweißt ist;
- Figur 4: eine prinzipmäßige Darstellung eines ersten Bauelements und eines zweiten Bauelements, deren Kontaktflächen mittels einer Lasereinrichtung erhitzt werden, und einer Kontakteinrichtung, welche die beiden Bauelemente in Kontakt zueinander bringt, sowie einer Steuereinrichtung;
- Figur 5: eine prinzipmäßige Darstellung von zwei vertikal angeordneten Vertikalstielen eines Gerüsts, die über zwei erfindungsgemäß hergestellte Horizontalriegel miteinander verbunden sind;
- Figur 6: eine prinzipmäßige perspektivische Darstellung eines ersten Bauelements und eines zweiten Bauelements;
- Figur 7: eine prinzipmäßige Darstellung eines ersten Bauelements nach Figur 6 und eines dritten Bauelements;
- Figur 8: eine weitere perspektivische Darstellung des ersten Bauelements und des zweiten Bauelements nach Figur 6;
- Figur 9: eine prinzipmäßige Darstellung des ersten Bauelements und des zweiten Bauelements nach Figur 6 in einem miteinander verbundenen Zustand, wobei zusätzlich ein Keilelement eines Horizontalriegels eingesetzt ist;
- Figur 10: eine prinzipmäßige perspektivische Darstellung eines ersten Bauelements und eines zweiten Bauelements in einer zweiten Ausführungsform;
- Figur 11: eine Darstellung nach Figur 10 in zusammengesetztem Zustand in einer Seitenansicht, mit einer strichlinierten Darstellung von verdeckten Kanten;
- Figur 12: eine prinzipmäßige perspektivische Darstellung eines ersten Bauelements und eines zweiten Bauelements in einer dritten Ausführungsform;

- Figur 13: eine Darstellung nach Figur 12 in zusammengesetztem Zustand in einer Seitenansicht, mit einer strichlinierten Darstellung von verdeckten Kanten;
- Figur 14: eine abstrahierte Darstellung des Horizontalriegels im fertigen Zustand mit einer SOLL-Riegellänge zur Verdeutlichung des Prinzips der Erfindung und
- Figur 15: eine abstrahierte Darstellung des Horizontalriegels vor dem Verschweißen mit einer IST-Riegellänge zur Verdeutlichung des Prinzips der Erfindung.

Verfahren und Vorrichtungen zum Verschweißen eines ersten Bauelements 1 mit einem zweiten Bauelement 2 und, wie im Ausführungsbeispiel optional dargestellt, auch mit einem dritten Bauelement 3 mittels einer Lasereinrichtung 4 sind aus dem allgemeinen Stand der Technik grundsätzlich bekannt. Daher wird nachfolgend nur auf die für die Erfindung wesentlichen Elemente näher eingegangen.

Im Ausführungsbeispiel sind die erfindungsgemäße Vorrichtung und das erfindungsgemäße Verfahren zum Verschweißen anhand einer besonders bevorzugten Anwendung dargestellt.

Das erste Bauelement 1, das zweite Bauelement 2 und das dritte Bauelement 3 sind aus Metall, insbesondere aus Stahl, ausgebildet.

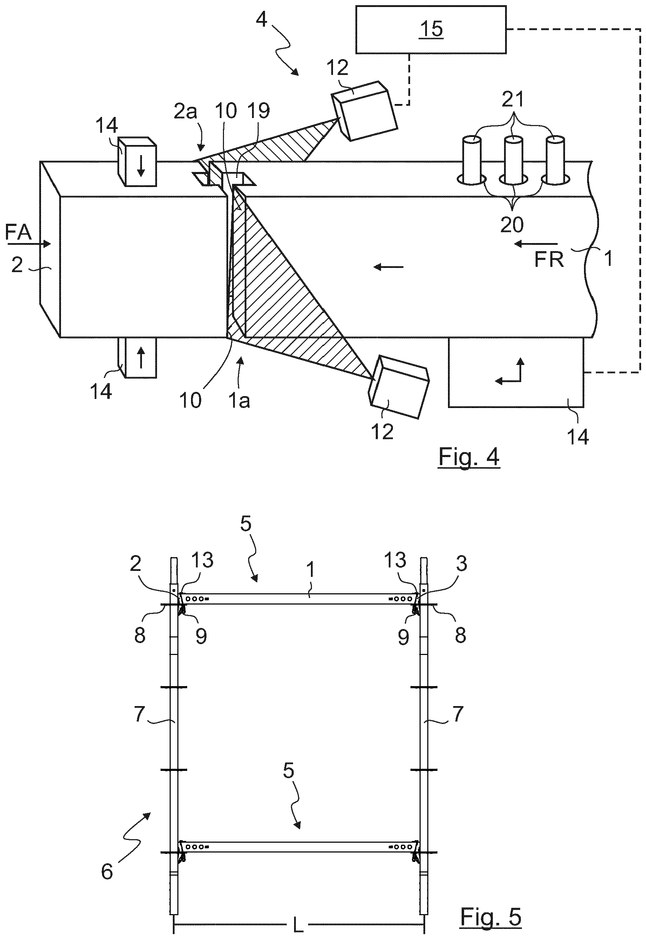

Es handelt sich bei dem ersten Bauelement 1 um ein Rohr, insbesondere ein Riegelrohr 1, eines Horizontalriegels 5 für ein Gerüst, wie dies beispielhaft in Figur 5 dargestellt ist.

Im Ausführungsbeispiel wird die Erfindung anhand eines Horizontalriegel 5 dargestellt, hierauf ist die Erfindung und das Ausführungsbeispiel jedoch nicht beschränkt zu verstehen.

Es kann sich im Ausführungsbeispiel um einen beliebigen Horizontalriegel handeln, insbesondere auch um einen sogenannten Modul-Horizontalriegel.

Bei dem zweiten Bauelement 2 und dem dritten Bauelement 3 handelt es sich jeweils um ein Verbindungselement, insbesondere um einen Riegelkopf, insbesondere einen Riegelkopf des Horizontalriegels 5 für das beispielhaft in Figur 5 dargestellte Gerüst 6.

Bei dem zweiten Bauelement handelt es sich um den ersten Riegelkopf 2, welcher nachfolgend verkürzt auch nur als Riegelkopf 2 bezeichnet wird, und bei dem dritten Bauelement um den zweiten Riegelkopf 3. Die beiden Riegelköpfe 2, 3 sind vorzugsweise baugleich.

Bei dem Riegelrohr 1 handelt es sich vorzugsweise um ein Bauelement aus Blech. Bei dem Riegelkopf 2 handelt es sich vorzugsweise um ein geschmiedetes Bauteil.

Das Ausführungsbeispiel offenbart zwar eine besonders bevorzugte Anwendung der erfindungsgemäßen Vorrichtung und des erfindungsgemäßen Verfahrens anhand der Darstellung des Aufbaus eines Horizontalriegels 5 für ein Gerüst 6, hierauf ist das Ausführungsbeispiel jedoch nicht beschränkt zu verstehen. Das erfindungsgemäße Verfahren und die erfindungsgemäße Vorrichtung eignet sich allgemein zum Verschweißen von Bauelementen.

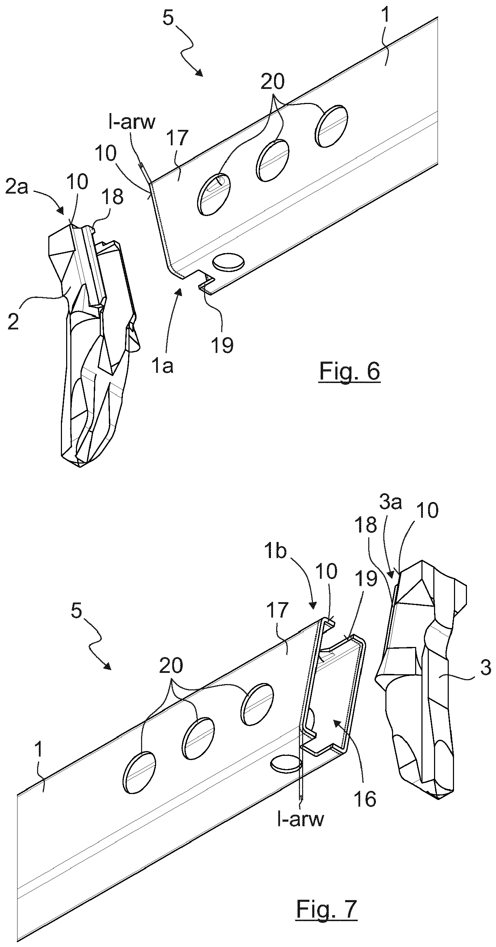

In den Figuren 6 bis 13 sind drei verschiedene Ausführungsbeispiele eines Horizontalriegels 5 dargestellt, bei denen das Riegelrohr 1 unter anderem unterschiedliche Querschnittsformen aufweist. Für diese Ausführungsform eignet sich die erfindungsgemäße Vorrichtung und das erfindungsgemäße Verfahren in besonderer Weise. Grundsätzlich kann das Riegelrohr 1 jedoch eine beliebige Querschnittsform aufweisen.

Der grundsätzliche Aufbau von Horizontalriegeln 5 und deren Verwendung, insbesondere bei Gerüsten 6, ist aus dem Stand der Technik hinlänglich bekannt, weshalb hierauf nachfolgend nicht näher eingegangen wird.

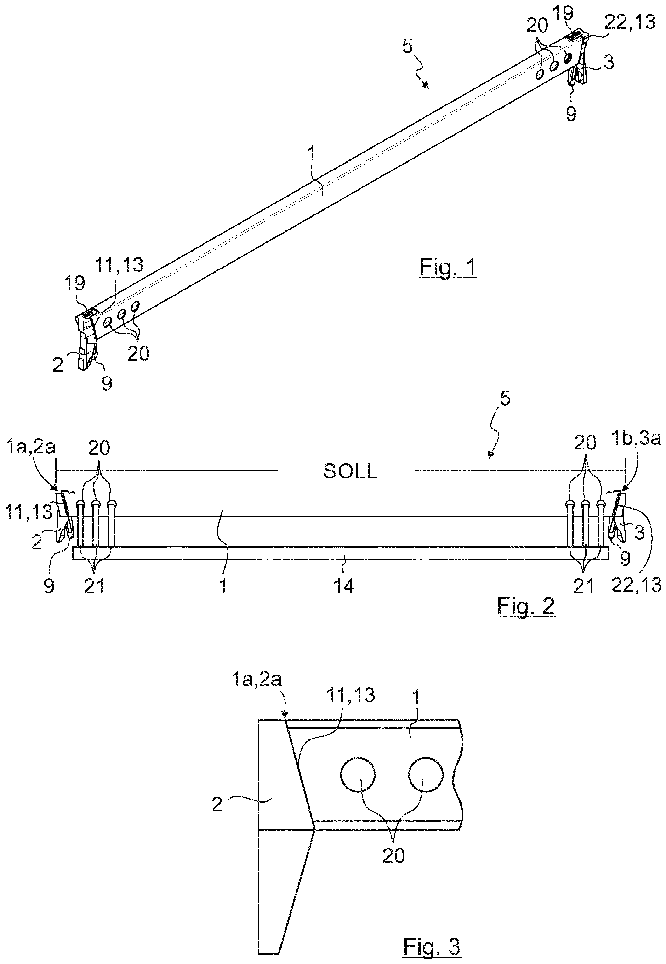

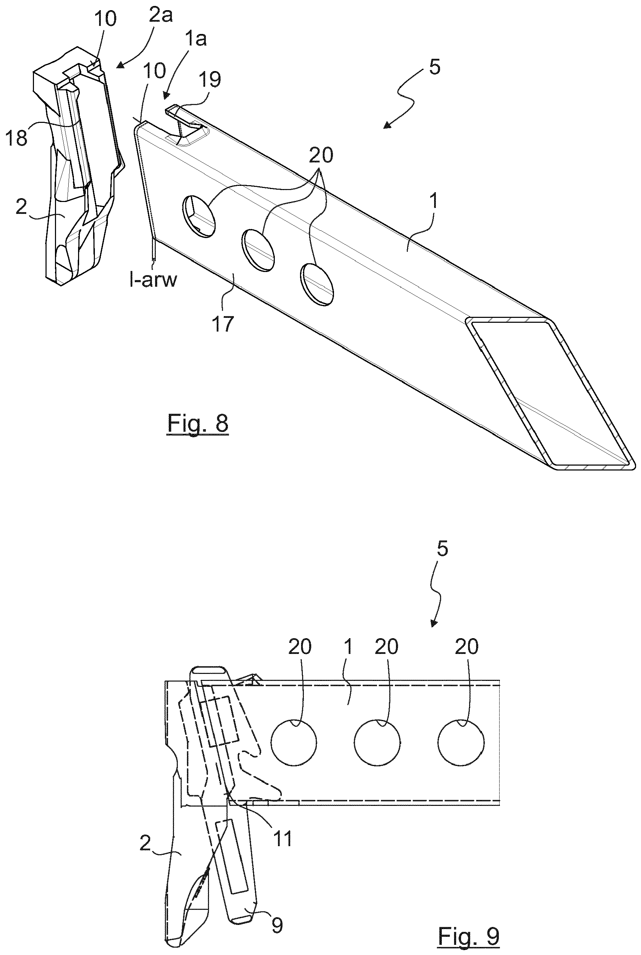

Gerüste 6 weisen in der Regel eine Vielzahl von Horizontalriegeln 5 auf, exemplarisch sind bei dem Gerüst 6 in Figur 5 zwischen zwei vertikal verlaufenden Vertikalstielen 7 zwei horizontal versetzt zueinander und jeweils horizontal verlaufende Horizontalriegel 5 dargestellt. Zur Befestigung ist dabei in bekannter Weise eine Keilschlossverbindung vorgesehen. Hierzu ist an den Vertikalstielen 7 eine zumeist aus Stahl bestehende Lochscheibe 8 angebracht, in welche jeweils ein Riegelkopf 2, 3 eingeführt und dort mittels eines Keils 9 befestigt werden kann. Ein derartiger Keil 9 ist in Figur 1, in Figur 2, in Figur 5 und in Figur 9 prinzipmäßig dargestellt.

Die Länge der Horizontalriegel 5 kann beliebig sein. Im Regelfall beträgt die Gesamtlänge eines Horizontalriegels 5, der sich aus der Gesamtlänge des Riegelrohrs 1 und den beiden daran angeschweißten Riegelköpfen 2, 3 ergibt, zwischen 1 m und 4 m.

In Figur 5 ist der Achsenabstand der Vertikalstiele 7 mit dem Bezugszeichen L bezeichnet.

Horizontalriegel 5 weisen im Regelfall an den stirnseitigen Enden jeweils einen Riegelkopf 2, 3 auf. Es sind jedoch auch Horizontalriegel 5 bekannt, die nur an einer Stirnseite mit einem Riegelkopf 2 verschweißt sind. Das Ausführungsbeispiel gilt als Offenbarung für beide Varianten.

Das erfindungsgemäße Verfahren zum Verschweißen eines Riegelrohrs mit einem Riegelkopf 2 mittels der Lasereinrichtung 4 sieht vor, dass alle Kontaktflächen 10 des Riegelrohrs 1 und/oder des Riegelkopfs 2 zwischen dem Riegelrohr 1 und dem Riegelkopf 2 gleichzeitig mittels der Lasereinrichtung 4 erhitzt und plastisch erweicht werden. Es kann dabei vorgesehen sein, dass nur die Kontaktflächen 10 des Riegelrohrs 1 oder nur die Kontaktflächen 10 des Riegelkopfs 2 plastisch erweicht werden, von Vorteil ist es jedoch, wenn alle Kontaktflächen 10 des Riegelkopfs 1 und alle Kontaktflächen 10 des Riegelkopfs 2 plastisch erweicht werden.

Das Prinzip des Erhitzens und des plastischen Erweichens der Kontaktflächen 10 ist in Figur 4 dargestellt. Figur 4 zeigt dabei einen Abstand zwischen dem Riegelrohr 1 und dem Riegelkopf 2, so dass die jeweiligen Kontaktflächen 10, die sich zwischen dem Riegelrohr 1 und dem Riegelkopf 2 befinden, auf Abstand zueinander angeordnet sind. Dies dient in Figur 4 jedoch nur der Verdeutlichung des Prinzips. Grundsätzlich ist es zwar möglich, eine Erhitzung durch die Lasereinrichtung 4 vorzunehmen in einem Zustand, in dem die Kontaktflächen 10 des Riegelrohrs 1 bzw. des Riegelkopfs 2 einen Abstand zueinander aufweisen, es ist jedoch zu bevorzugen, wenn sich die Kontaktflächen 10 des Riegelrohrs 1 und des Riegelkopfs 2 berühren bzw. diese in Kontakt zueinander gebracht sind, bevor die Lasereinrichtung 4 die Kontaktflächen 10 erhitzt und plastisch erweicht.

Die Lasereinrichtung 4 kann einen beliebigen, geeigneten Aufbau aufweisen. Zu bevorzugen ist es, wenn die Lasereinrichtung 4 zur Durchführung eines laserbasierten Pressstumpfschweißens eingerichtet ist.

Die Lasereinrichtung 4 ist im Ausführungsbeispiel eingerichtet, alle Kontaktflächen 10 des Riegelrohrs 1 und des Riegelkopfs 2 gleichzeitig zu erhitzen und plastisch zu erweichen. Die Lasereinrichtung 4 ist dabei eingerichtet, um einen Laserstrahl mit einer Linienbreite zu erzeugen, der alle Kontaktflächen 10 des Riegelrohrs 1 und des Riegelkopfs 2 gleichzeitig plastisch erweicht. Wie vorstehend bereits ausgeführt, ist das Ausführungsbeispiel derart zu verstehen, dass auch vorgesehen sein kann, dass nur die Kontaktflächen 10 des Riegelrohrs 1 oder nur die Kontaktflächen 10 des Riegelkopfs 2 plastisch erweicht werden.

Im Ausführungsbeispiel ist vorgesehen, dass die Lasereinrichtung 4 eingerichtet ist, einen Laserstrahl mit einer Linienbreite zu erzeugen, der sich über die gesamte Länge einer um die Kontaktflächen 10 umlaufenden Stoßkante 11 zwischen dem Riegelrohr 1 und dem Riegelkopf 2 erstreckt. Diese Ausführungsform hat sich als besonders geeignet herausgestellt. Grundsätzlich wäre es jedoch auch möglich, dass die Lasereinrichtung 4 eingerichtet ist, um die um die Kontaktflächen 10 umlaufende Stoßkante 11 zwischen dem Riegelrohr 1 und dem Riegelkopf 2 nur bzw. wenigstens entlang eines Abschnitts zu verschweißen.

Der Laserstrahl der Lasereinrichtung 4 kann durch einen einzigen Laser 12 erzeugt werden, beispielsweise indem entsprechende Optiken oder eine entsprechende Oszillation des Laserstrahls vorgesehen ist (nicht dargestellt). Ergänzend oder alternativ dazu kann auch vorgesehen sein, dass die Lasereinrichtung 4 zwei oder mehrere Laser 12 aufweist, die gemeinsam den Laserstrahl mit einer Linienbreite erzeugen derart, dass alle Kontaktflächen 10 zwischen dem Riegelrohr 1 und dem Riegelkopf 2 gleichzeitig aufschmelzen bzw. derart, dass sich der Laserstrahl über die gesamte Länge der Stoßkante 11 zwischen dem Riegelrohr 1 und dem Riegelkopf 2 erstreckt.

In dem in Figur 4 dargestellten Ausführungsbeispiel sind exemplarisch zwei Laser 12 dargestellt, die gemeinsam einen Laserstrahl mit der vorstehend beschriebenen Linienbreite erzeugen.

Der Eintrag der Wärmeenergie kann beispielsweise auch dadurch erfolgen, dass die Lasereinrichtung 4 einen oder mehrere Diodenlaser aufweist. Es kann dabei auch vorgesehen sein, dass für jeden Abschnitt der Stoßkante 11 ein gesonderter Laserspot erzeugt wird derart, dass der Laserstrahl insgesamt eine Linienbreite aufweist derart, dass alle Kontaktflächen 10 plastisch erweicht werden.

Das erfindungsgemäße Verfahren und die erfindungsgemäße Vorrichtung sehen vor, dass das Riegelrohr 1 und der Riegelkopf 2 aufeinandergepresst werden. Dadurch werden die Kontaktflächen 10 des Riegelrohrs 1 bzw. des Riegelkopfs 2 aufeinandergepresst bzw. aufeinandergedrückt. Aufgrund der plastischen Erweichung der Kontaktfläche 10 des Riegelrohrs 1 und/oder der Kontaktfläche 10 des Riegelkopfs 2 werden gegebenenfalls vorhandene Spalte überbrückt, Fertigungstoleranzen ausgeglichen und sichergestellt, dass ausreichend viel Material vorhanden ist, um mittels der Lasereinrichtung 4 die Stoßkante 11 zu verschweißen bzw. eine Schweißnaht 13 zu setzen.

Im Ausführungsbeispiel ist vorzugsweise vorgesehen, dass das Riegelrohr 1 und der Riegelkopf 2 derart aufeinandergepresst werden, dass sich das Riegelrohr 1 und der Riegelkopf 2 aufeinander zu bewegen, vorzugsweise jedoch nur ein kleines Wegstück.

Um das Riegelrohr 1 und den Riegelkopf 2 in Kontakt zueinander zu bringen, ist eine Kontakteinrichtung 14 vorgesehen. Eine mögliche Ausführungsform einer Kontakteinrichtung 14 ist prinzipmäßig in Figur 4 dargestellt.

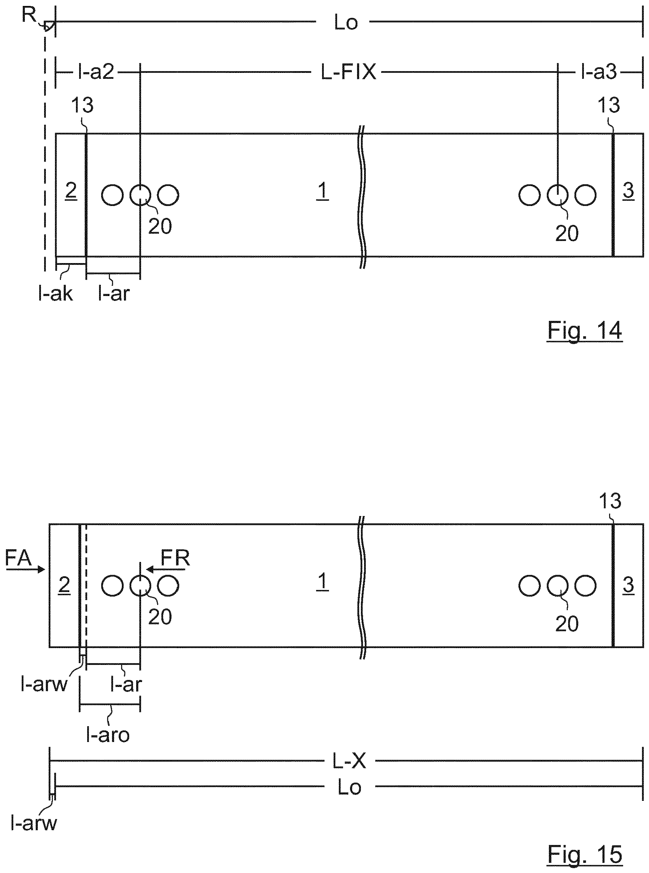

Die Kontakteinrichtung 14 kann grundsätzlich derart aufgebaut sein, dass das Riegelrohr 1 und der Riegelkopf 2 durch eine erste Teileinrichtung miteinander in Kontakt gebracht werden und eine zweite Teileinrichtung vorgesehen ist, um das Riegelrohr 1 und den Riegelkopf 2 mit einer Kraft (FA) bzw. einer Reaktionskraft (FR) aufeinander zu pressen (wie prinzipmäßig z.B. in Figur 4 und Figur 15 dargestellt), zwei derartige Teileinrichtungen werden gemeinsam als Kontakteinrichtung 14 im Sinne der Erfindung angesehen. Zu bevorzugen ist es jedoch, wenn die Kontakteinrichtung 14 durch eine einzige Einrichtung realisiert ist.

Die Kontakteinrichtung 14 ist, wie vorstehend bereits erwähnt, vorzugsweise derart eingerichtet, dass das Riegelrohr 1 und der Riegelkopf 2 derart aufeinandergepresst werden, dass sich das Riegelrohr 1 und der Riegelkopf 2 nach der plastischen Erweichung der Kontaktflächen 10 aufeinander zu bewegen.

Im Ausführungsbeispiel ist eine Steuereinrichtung 15 vorgesehen, welche eine IST-Gesamtlänge des Riegelrohrs 1 und des Riegelkopfs 2 erfasst, zumindest nachdem die Lasereinrichtung 4 die Kontaktflächen 10 plastisch erweicht hat. Die Steuereinrichtung 15 vergleicht dabei die IST-Gesamtlänge und eine definierte SOLL-Gesamtlänge des Riegelrohrs 1 und des Riegelkopfs 2.

Das Riegelrohr 1 und/oder der Riegelkopf 2 werden mit einem Übermaß hergestellt derart, dass die IST-Gesamtlänge des Riegelrohrs 1 und des Riegelkopfs 2, wenn diese vor dem Verfahrensschritt des Erhitzens in Kontakt zueinander gebracht werden, größer ist als eine SOLL-Gesamtlänge, die das Riegelrohr 1 und der Riegelkopf 2 aufweisen, wenn diese miteinander fertigverschweißt sind.

Vorzugsweise wird nur das Riegelrohr 1 mit einem entsprechenden Übermaß hergestellt. Dies hat sich als einfacher herausgestellt.

Im Ausführungsbeispiel ist vorgesehen, dass die IST-Gesamtlänge des Riegelrohrs 1 und des Riegelkopfs 2 während der Durchführung des Verfahrens erfasst wird. Dabei kann der Verfahrensschritt des Erhitzens und des plastischen Erweichens so lange bzw. verlängert und/oder erneut durchgeführt werden und/oder der Verfahrensschritt des Aufeinanderpressens so lange bzw. verlängert und/oder verstärkt werden, wenn bzw. solange die IST-Gesamtlänge des Riegelrohrs 1 und des Riegelkopfs 2 einen Wert für eine SOLL-Gesamtlänge übersteigt.

Die Steuereinrichtung 15 steuert somit die Lasereinrichtung 4 und/oder die Kontakteinrichtung 14 derart, dass das fertig mit dem Riegelkopf 2 verschweißte Riegelrohr 1 eine definierte SOLL-Gesamtlänge aufweist.

Alle Kontaktflächen 10 zwischen dem Riegelrohr 1 und dem Riegelkopf 2 werden im Ausführungsbeispiel dadurch gebildet, dass eine erste Stirnseite 1a des Riegelrohrs 1 und eine Stirnseite 2a des Riegelkopfs 2 miteinander in Kontakt gebracht werden. In den Ausführungsbeispielen ist dabei vorgesehen, dass die erste Stirnseite 1a des Riegelrohrs 1 und die Stirnseite 2a des Riegelkopfs 2 vor dem Verschweißen formschlüssig miteinander verbunden, vorzugsweise zusammengesteckt, werden.

Das Riegelrohr 1 weist ausgehend von der ersten Stirnseite 1a einen sich nach innen erstreckenden Hohlraum 16 auf, der wenigstens abschnittsweise von einer Wandung 17 umgeben ist. Der Riegelkopf 2 weist an der Stirnseite 2a einen Vorsprung 18 auf, der mit dem Hohlraum 16 bzw. der Wandung 17 derart korrespondiert, dass der Vorsprung 18 vor dem Verschweißen in den Hohlraum 16 einsteckbar ist, vorzugsweise derart, dass sich eine formschlüssige Verbindung ergibt.

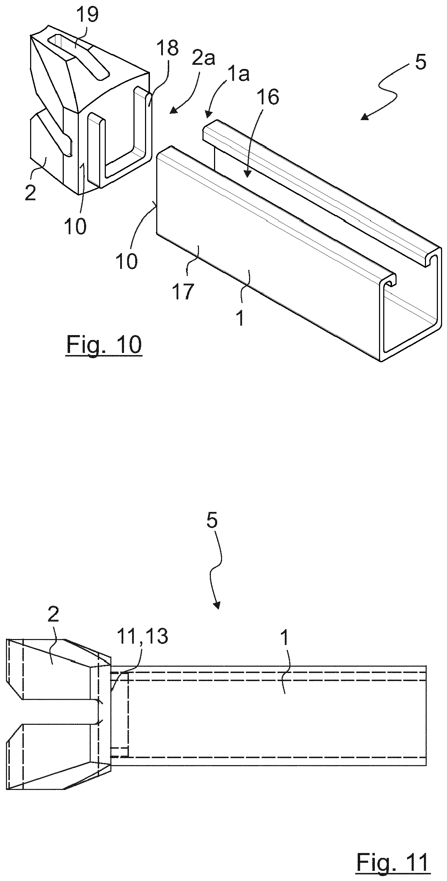

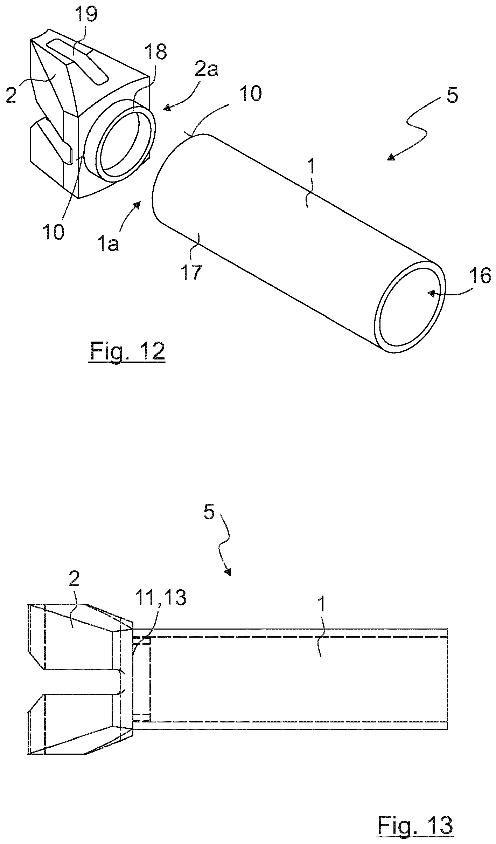

Wie sich aus den Figuren 1 bis 3 und 6 bis 9 ergibt, kann vorgesehen sein, dass das Riegelrohr 1 und der Riegelkopf 2 derart gestaltet sind, dass diese gemeinsam einen Durchlass 19 für den Keil 9 aufweisen, so dass der Keil 9 die Verbindung zwischen dem Riegelkopf 2 und der Lochscheibe 8 fixieren bzw. festlegen kann. Eine derartige Gestaltung ist grundsätzlich bereits bekannt. In den Figuren 10 und 13 wird der Durchlass 19 für den Keil 9 nur durch den Riegelkopf 2 bereitgestellt. Auch dies ist grundsätzlich möglich.

Von Vorteil kann es sein, den Keil 9 vor dem Verschweißen in den Durchlass 19 verliersicher einzusetzen.

Die Kontakteinrichtung 14 kann grundsätzlich in beliebiger Art und Weise dafür sorgen, dass das Riegelrohr 1 und der Riegelkopf 2 in Kontakt miteinander gebracht und in der gewünschten Weise aufeinandergepresst werden. Es hat sich jedoch als besonders geeignet herausgestellt, wenn wenigstens eines der Bauelemente 1, 2, im Ausführungsbeispiel vorzugsweise nur das Riegelrohr 1, eine definierte Bohrung 20, vorzugsweise mehrere in Längsrichtung versetzt zueinander angeordnete Bohrungen 20, als Referenz zur Positionierung des Riegelrohrs 1 und des Riegelkopfs 2 zueinander aufweist. Die Bohrung 20 kann dabei auch zur Feststellung der IST-Gesamtlänge verwendet werden, wozu die Kontakteinrichtung 14 bzw. Steuereinrichtung 15 entsprechend eingerichtet sein können. Die wenigstens eine Bohrung 20 in dem Riegelrohr 1 dient im Ausführungsbeispiel dazu, das Riegelrohr 1 und den Riegelkopf 2 definiert zueinander zu positionieren.

Im Ausführungsbeispiel ist vorgesehen, dass das Riegelrohr 1 drei Bohrungen 20 aufweist, bei denen es sich um Durchgangsbohrungen handelt. In der Darstellung des Riegelrohrs 1 gemäß den Figuren 1 bis 3 und 6 bis 9 ist vorgesehen, dass die Bohrung 20 zwei gegenüberliegende Seitenwände durchdringt bzw. sich jede Bohrung 20 aus zwei miteinander fluchtenden Öffnungen in gegenüberliegenden Seitenwänden zusammensetzt.

Die Kontakteinrichtung 14 ist vorzugsweise eingerichtet, um das Riegelrohr 1 oder den Riegelkopf 2 als Anschlag zu positionieren und um das jeweils andere Bauelement mit einer Kraft (FA) gegen das als Anschlag positionierte Bauelement zu pressen.

Im Ausführungsbeispiel ist vorgesehen, dass die Kontakteinrichtung 14 derart ausgebildet ist, dass die Kontakteinrichtung 14 den Riegelkopf 2 als Anschlag verwendet und die Kontakteinrichtung 14 derart eingerichtet ist, dass diese das Riegelrohr 1 gegen den Riegelkopf 2 anpresst.

Grundsätzlich kann dieser Aufbau auch umgekehrt erfolgen.

Es kann auch vorgesehen sein, dass die Kontakteinrichtung 14 eingerichtet ist, um das Riegelrohr 1 in Richtung auf den Riegelkopf 2 zu pressen und den Riegelkopf 2 in Richtung auf das Riegelrohr 1 mit einer Kraft zu beaufschlagen.

Wie in Figur 4 prinzipmäßig dargestellt ist, kann es von Vorteil sein, wenn die Kontakteinrichtungen 14 Bolzen 21 aufweist, die in die Bohrungen 20 in dem Riegelrohr 1 vorzugsweise formschlüssig eindringen. Durch die Bolzen 21 lässt sich das Riegelrohr 1 definiert positionieren und entweder als Anschlag für den Riegelkopf 2 verwenden und/oder die Kontakteinrichtung 14 kann über die Bolzen 21 das Riegelrohr 1 mit einer Kraft beaufschlagen, so dass das Riegelrohr 1 gegen den Riegelkopf 2 gepresst wird. In Figur 4 ist dargestellt, dass die Kontakteinrichtung 14 drei Bolzen 21 aufweist, die jeweils die Bohrungen 20 durchdringen.

Zur besseren Darstellung sind in der prinzipmäßigen Darstellung der Figur 4 die Bohrungen 20 gegenüber den Darstellungen in den Figuren 1 bis 3 und 6 bis 9 um 90° verdreht, das heißt nicht in den Seitenflächen, sondern an der Ober- und Unterseite des Riegelrohrs 1 dargestellt. Grundsätzlich sind beide Varianten möglich, die Einbringung in Seitenwänden des Riegelrohrs 1, das heißt den Wandungsteilen, die nicht die Oberseite bzw. die Unterseite des Riegelrohrs 1 bilden, wenn dieses in einem Gerüst 6 festgelegt ist, ist jedoch zu bevorzugen.

Im Ausführungsbeispiel ist vorgesehen, dass das Riegelrohr 1 an der ersten Stirnseite 1a mit einer Stirnseite 2a des Riegelkopf 2 verschweißt wird, wie vorstehend beschrieben. Im Ausführungsbeispiel ist jedoch ferner vorgesehen, dass auch eine zweite Stirnseite 1b des Riegelrohrs 1 mit einem zweiten Riegelkopf 3, welcher auch als drittes Bauelement im Rahmen der Erfindung bezeichnet wird, verschweißt wird. Hierzu ist vorgesehen, dass die zweite Stirnseite 1b des Riegelrohrs 1 mit einer Stirnseite 3a des zweiten Riegelkopfs 3 in Kontakt gebracht wird. Vorgesehen ist dabei, dass alle Kontaktflächen 10 des Riegelrohrs 1 und/oder des zweiten Riegelkopfs 3 zwischen dem Riegelrohr 1 und dem zweiten Riegelkopf 3 gleichzeitig mittels der Lasereinrichtung 4 erhitzt und plastisch erweicht werden. Im Ausführungsbeispiel ist vorgesehen, dass hierfür die Lasereinrichtung 4 verwendet wird. Grundsätzlich wäre es auch möglich, insbesondere wenn eine gleichzeitige oder annähernd gleichzeitige Bearbeitung beider Stirnseiten 1a, 1b des Riegelrohrs 1 vorgesehen ist, eine zweite Lasereinrichtung vorzusehen.

Vorgesehen sein kann dabei ferner, dass das Riegelrohr 1 und der zweite Riegelkopf 3 aufeinandergepresst werden, und eine Stoßkante 22 zwischen dem Riegelrohr 1 und dem zweiten Riegelkopf 3 wenigstens entlang eines Abschnitts mittels der Lasereinrichtung 4 verschweißt wird. Das Aufeinanderpressen des Riegelrohrs 1 und des zweiten Riegelkopf 3 kann dabei vorzugsweise derart erfolgen, dass das Riegelrohr 1 und der zweite Riegelkopf 3 aufeinander zu bewegt werden.

Um die Presskraft aufzubringen bzw. um das Riegelrohr 1 mit dem zweiten Riegelkopf 3 in Kontakt zu bringen, kann die Kontakteinrichtung 14 vorgesehen sein. Es kann jedoch auch vorgesehen sein, dass eine zweite Kontakteinrichtung hierfür vorgesehen ist.

Im Ausführungsbeispiel ist vorgesehen, dass die Lasereinrichtung 4 und auch die Kontakteinrichtung 14 dafür verwendet werden, sowohl das Riegelrohr 1 mit dem Riegelkopf 2 als auch mit dem zweiten Riegelkopf 3 aufeinander zu pressen bzw. die jeweiligen Kontaktflächen 10 zu erweichen und eine Stoßkante 11 bzw. 22 wenigstens entlang eines Abschnitts, vorzugsweise vollständig, zu verschweißen bzw. die Schweißnaht 13 zu setzen.

Alle Varianten und Merkmale, die beschrieben wurden, um das Riegelrohr 1 mit dem Riegelkopf 2 zu verschweißen, können auch verwendet werden, um das Riegelrohr 1 mit dem zweiten Riegelkopf 3 zu verschweißen.

Bei der Bestimmung der SOLL-Gesamtlänge kann, wenn der zweite Riegelkopf 3 angeschweißt werden soll, auf die Gesamtlänge abgestellt werden, die der Horizontalriegel 5 nach Fertigstellung aufweisen soll, das heißt die SOLL-Gesamtlänge, die sich aus dem Riegelrohr 1 mit den beiden angeschweißten Riegelköpfen 2, 3 ergibt.

Grundsätzlich kann vorgesehen sein, dass die Kontakteinrichtung 14 eine Druck- bzw. Presskraft solange aufbringt, bis die gewünschte SOLL-Gesamtlänge erreicht wird.

Es kann vorgesehen sein, dass die Lasereinrichtung 4 derart eingerichtet ist, dass ein Betrieb des Lasers von unter 5 Sekunden ausreichend ist, um alle Kontaktflächen 10 zwischen dem Riegelrohr 1 und dem Riegelkopf zu erweichen und die Stoßkante 11 zu verschweißen. Es kann dabei von Vorteil sein, wenn die Lasereinrichtung 4 insgesamt eine Leistung von 3 bis 15 kW, vorzugsweise 5 bis 12 kW, insbesondere 8 bis 10 kW aufweist. Diese Werte haben sich als besonders geeignet herausgestellt.

Die Lasereinrichtung 4 kann derart betrieben und eingerichtet sein, dass an den Kontaktflächen 10 zwischen dem Riegelrohr 1 und dem Riegelkopf 2 ein Schmelzbad entsteht bzw. das Material teigig wird.

Es kann vorgesehen sein, dass ein Schutzgas, vorzugsweise Argon, währen des Schweißprozesses zugeführt wird, um eine Oxidation zu vermeiden.

Es kann ferner vorgesehen sein, dass ein Verfahrweg, um den das Riegelrohr 1 und der Riegelkopf 2 aufeinander zu bewegt werden, vorzugsweise 0,4 mm bis 8 mm, insbesondere 0,5 mm bis 6 mm, bevorzugt 1 mm bis 4 mm, besonders bevorzugt 1,5 mm bis 3 mm beträgt.

Die Länge der Schweißnaht 13 kann beispielsweise 30 mm bis 200 mm, vorzugsweise 40 mm bis 180 mm, weiter bevorzugt 60 mm bis 150 mm, betragen.

Die Figur 14 zeigt eine abstrahierte Darstellung der Erfindung. Dargestellt ist ein Horizontalriegel 5 im fertigen Zustand, d.h. mit einer SOLL-Riegellänge Lo. Die SOLL-Riegellänge Lo kann als Summe von drei Teilen bestimmt werden, wobei die mittlere Teillänge L-FIX durch die Bohrungen 20 definiert ist und links und rechts davon (in Bildebene betrachtet) zwei vorzugsweise gleiche Anschlusslängen l-a2 und l-a3 definiert sind.

Dargestellt ist auch eine SOLL-Abschnittslänge l-ar, die sich von der mittleren dargestellten Bohrung bis zum Ende des ersten Bauelements, d.h. im Ausführungsbeispiel des Riegelrohrs erstreckt. Ferner ist eine Kopflänge l-ak dargestellt, welche die Länge des zweiten Bauelements, d.h. im Ausführungsbeispiel des Riegelkopfs bezeichnet.

Des Weiteren zeigt die Figur 14 prinzipmäßig einen Anschweißwinkel R.

Durch die Presskraft FA bzw. die Reaktionskraft FR, die in Figur 4 und 15 prinzipmäßig dargestellt sind, wird die Anschlusslänge l-a2 und der Anschweißwinkel R auf den jeweiligen SOLL-Wert gebracht. Von Vorteil ist es dabei, wenn das Verfahren derart betrieben wird bzw. die Vorrichtung derart geschaltet ist, dass die Kontakteinrichtung 14 das Riegelrohr 1 als Anschlag verwendet und die Kontakteinrichtung 14 derart eingerichtet ist, dass diese den Riegelkopf 2 gegen den Riegelrohr 1 anpresst. Dabei kann vorgesehen sein, dass das Riegelrohr 1 dadurch als Anschlag verwendet wird, dass in eine der Bohrungen 20, im Ausführungsbeispiel eine der mittleren Bohrung 20 der linken Seite, eingegriffen wird. Dadurch wird an dieser Stelle die Reaktionskraft FR abgefangen und somit nur ein Teil des Riegelrohres 1 mit der Presskraft FA belastet.

Wie in Figur 14 dargestellt, setzt sich die Anschlusslänge l-a2 zusammen aus der Kopflänge l-ak des Riegelkopfs 2 und der SOLL-Abschnittslänge l-ar.

Wie in Figur 15 dargestellt ist, ergibt sich die SOLL-Abschnittslänge l-ar aus der Differenz zwischen der IST-Abschnittslänge l-aro und der Schmelz-Ausgleichslänge l-arw. Die Schmelz- Ausgleichslänge l-arw ist die Länge um die das Riegelrohr 1 im IST-Zustand länger als nötig ausgeführt ist, damit beim Zusammenpressen ausreichend Material zur Ausbildung der Schweißnaht 13 verfügbar ist. In Figur 15 ist zusätzliche eine strichlinierte Linie eingezeichnet, um die Länge der Schmelz-Ausgleichslänge l-arw zu bezeichnen. Die SOLL-Riegellänge Lo ist somit, wie in Figur 15 dargestellt, um die Schmelz-Ausgleichslänge l-arw kürzer als die IST-Riegellänge L-X. Zur Vereinfachung ist in Figur 15 bereits eine fertige Schweißnaht 13 zwischen dem Riegelrohr 1 und dem dritten Bauelement bzw. dem zweiten Riegelkopf 3 dargestellt. Wenn der zweite Riegelkopf 3 ebenfalls mit dem erfindungsgemäßen Verfahren bzw. der erfindungsgemäßen Vorrichtung verschweißt werden soll, dann hat das Riegelrohr 1 eine entsprechend größere Länge aufzuweisen, so dass auch an dieser Stelle ausreichend Material zum Verschweißen verfügbar ist. Vorzugsweise weist dann die IST-Riegellänge L-X eine Länge auf, die der SOLL-Riegellänge Lo und zweimal der Schmelz-Ausgleichslänge l-arw entspricht.

Durch das Aufeinanderpressen verringert sich die IST-Abschnittslänge L-aro zur SOLL-Abschnittslänge l-ar, aus der Differenz entsteht die Schmelz-Ausgleichslänge l-arw.

Durch die Steuerung der Schmelz-Ausgleichslänge l-arw kann die SOLL-Riegellänge Lo und der Anschweißwinkel R bestimmt werden.

In den Figuren 6 bis 8 ist prinzipmäßig ebenfalls die Schmelz-Ausgleichslänge l-arw eingezeichnet.

## Patentansprüche

1. Verfahren zum Verschweißen eines ersten Bauelements (1) mit einem zweiten Bauelement (2) mittels einer Lasereinrichtung (4), wonach das erste Bauelement (1) und das zweite Bauelement (2) zum Verschweißen in Kontakt zueinander gebracht werden,
**dadurch gekennzeichnet, dass**
alle Kontaktflächen (10) des ersten Bauelements (1) und/oder des zweiten Bauelements (2) zwischen dem ersten Bauelement (1) und dem zweiten Bauelement (2) gleichzeitig mittels der Lasereinrichtung (4) erhitzt und plastisch erweicht werden, wonach das erste Bauelement (1) und das zweite Bauelement (2) aufeinandergepresst werden, und eine um die Kontaktflächen (10) umlaufende Stoßkante (11) zwischen dem ersten Bauelement (1) und dem zweiten Bauelement (2) unter Ausbildung einer Schweißnaht (13) wenigstens entlang eines Abschnitts mittels der Lasereinrichtung (4) verschweißt wird.

2. Verfahren nach Anspruch 1,
**dadurch gekennzeichnet, dass**
die Lasereinrichtung (4) einen Laserstrahl mit einer Linienbreite erzeugt, der alle Kontaktflächen (10) des ersten Bauelements (1) und/oder des zweiten Bauelements (2) zwischen dem ersten Bauelement (1) und dem zweiten Bauelement (2) gleichzeitig erweicht und/oder sich über die gesamte Länge der Stoßkante (11) zwischen dem ersten Bauelement (1) und dem zweiten Bauelement (2) erstreckt.

3. Verfahren nach einem der Ansprüche 1 oder 2,
**dadurch gekennzeichnet, dass**
das erste Bauelement (1) und/oder das zweite Bauelement (2) mit einem Übermaß hergestellt wird, derart, dass eine IST-Gesamtlänge der Bauelemente (1,2), wenn diese vor dem Verfahrensschritt des Erhitzens in Kontakt zueinander gebracht werden, größer ist als eine SOLL-Gesamtlänge, die die beiden miteinander verschweißten Bauelemente (1,2) nach Abschluss des Verfahrens aufweisen sollen.

4. Verfahren nach Anspruch 3,
**dadurch gekennzeichnet, dass**
die IST-Gesamtlänge der Bauelemente (1,2) während der Durchführung des Verfahrens erfasst wird, wonach der Verfahrensschritt des Erhitzens und des plastischen Erweichens so lange oder erneut durchgeführt wird und/oder der Verfahrensschritt des Aufeinanderpressens so lange oder verstärkt durchgeführt wird, bis die IST-Gesamtlänge der Bauelemente (1,2) die SOLL-Gesamtlänge erreicht hat.

5. Verfahren nach Anspruch 3 oder 4,
**dadurch gekennzeichnet, dass**
wenigstens eines der Bauelemente (1,2) wenigstens eine definierte Bohrung (20), vorzugsweise mehrere in Längsrichtung zueinander versetzte Bohrungen (20), aufweist, die als Referenz zur Positionierung der Bauelemente (1,2) zur Durchführung des Verfahrens verwendet wird und/oder die zur Feststellung der IST-Gesamtlänge verwendet wird.

6. Verfahren nach einem der Ansprüche 1 bis 5,
**dadurch gekennzeichnet, dass**
alle Kontaktflächen (10) zwischen dem ersten Bauelement (1) und dem zweiten Bauelement (2) dadurch gebildet werden, dass eine erste Stirnseite (1a) des ersten Bauelements (1) und eine Stirnseite (2a) des zweiten Bauelements (2) miteinander in Kontakt gebracht werden.

7. Verfahren nach Anspruch 6,
**dadurch gekennzeichnet, dass**
das erste Bauelement (1) ausgehend von der ersten Stirnseite (1a) einen sich nach innen erstreckenden Hohlraum (16) aufweist, der wenigstens abschnittsweise von einer Wandung (17) umgeben ist, wobei ein an der Stirnseite (2a) des zweiten Bauelements (2) ausgebildeter Vorsprung (18) vor dem Verschweißen in den Hohlraum (16) eingesteckt wird.

8. Verfahren nach einem der Ansprüche 1 bis 7,
**dadurch gekennzeichnet, dass** das erste Bauelement (1) ein Rohr, insbesondere ein Riegelrohr, insbesondere eines Horizontalriegels (5) für ein Gerüst (6), ist und/oder das zweite Bauelement (2) ein Verbindungselement, insbesondere ein Riegelkopf, insbesondere ein Riegelkopf eines Horizontalriegels (5) für ein Gerüst (6), ist.

9. Verfahren nach einem der Ansprüche 1 bis 8,
**dadurch gekennzeichnet, dass**
eine zweite Stirnseite (1b) des ersten Bauelements (1) mit einer Stirnseite (3a) eines dritten Bauelements (3) in Kontakt gebracht wird, wonach alle Kontaktflächen (10) des ersten Bauelements (1) und/oder des dritten Bauelements (3) zwischen dem ersten Bauelement (1) und dem dritten Bauelement (3) gleichzeitig mittels der Lasereinrichtung (4) und/oder einer zweiten Lasereinrichtung erhitzt und plastisch erweicht werden, wonach das erste Bauelemente (1) und das dritte Bauelement (3) aufeinandergepresst werden, und eine um die Kontaktflächen (10) umlaufende Stoßkante (22) zwischen dem ersten Bauelement (1) und dem dritten Bauelement (3) unter Ausbildung einer weiteren Schweißnaht (13) wenigstens entlang eines Abschnitt mittels der Lasereinrichtung (4) oder der zweiten Lasereinrichtung verschweißt wird.

10. Verfahren nach Anspruch 9,
**dadurch gekennzeichnet, dass**
das dritte Bauelement (3) ein Verbindungselement, insbesondere ein Riegelkopf, insbesondere ein zweiter Riegelkopf eines Horizontalriegels (5), für ein Gerüst (6), ist.

11. Verfahren nach einem der Ansprüche 1 bis 10,
**dadurch gekennzeichnet, dass**
das erste Bauelement (1) und das zweite Bauelement (2) und/oder das dritte Bauelement (3) aus Metall, insbesondere aus, vorzugsweise beschichtetem, Stahl oder Aluminium bestehen.

12. Vorrichtung zum Verschweißen eines ersten Bauelements (1) mit einem zweiten Bauelement (2), aufweisend eine Kontakteinrichtung (14), um das erste Bauelement (1) und das zweite Bauelement (2) miteinander in Kontakt zu bringen, und aufweisend eine Lasereinrichtung (4), um das erste Bauelement (1) und das zweite Bauelement (2) miteinander zu verschweißen,
**dadurch gekennzeichnet, dass**
die Lasereinrichtung (4) eingerichtet ist, alle Kontaktflächen (10) des ersten Bauelements (1) und/oder des zweiten Bauelements (2) zwischen dem ersten Bauelement (1) und dem zweiten Bauelement (2) gleichzeitig zu erhitzen und plastisch zu erweichen, und wobei die Kontakteinrichtung (14) eingerichtet ist, das erste Bauelement (1) und das zweite Bauelement (2) aufeinanderzupressen, und die Lasereinrichtung (4) eingerichtet ist, um eine um die Kontaktflächen (10) umlaufende Stoßkante (11) zwischen dem ersten Bauelement (1) und dem zweiten Bauelement (2) unter Ausbildung einer Schweißnaht (13) wenigstens entlang eines Abschnitt zu verschweißen.

13. Vorrichtung nach Anspruch 12,
**dadurch gekennzeichnet, dass**
die Lasereinrichtung (4) eingerichtet ist, um einen Laserstrahl mit einer Linienbreite zu erzeugen derart, dass der Laserstrahl alle Kontaktflächen (10) des ersten Bauelements (1) und/oder des zweiten Bauelements (2) zwischen dem ersten Bauelement (1) und dem zweiten Bauelement (2) gleichzeitig plastisch erweicht, und/oder derart, dass sich der Laserstrahl über die gesamte Länge der Stoßkante (11) zwischen dem ersten Bauelement (1) und dem zweiten Bauelement (2) erstreckt.

14. Vorrichtung nach einem der Ansprüche 12 oder 13,
**dadurch gekennzeichnet, dass**
eine Steuereinrichtung (15) vorgesehen ist, welche eine IST-Gesamtlänge der Bauelemente (1,2) erfasst, während die Lasereinrichtung (4) die Kontaktflächen (10) plastisch erweicht, wobei die Steuereinrichtung (15) die IST-Gesamtlänge und eine definierte SOLL-Gesamtlänge der Bauelemente (1,2) vergleicht, wobei die SOLL-Gesamtlänge der Bauelemente (1,2) kürzer ist, als die IST-Gesamtlänge der Bauelemente (1,2), wenn diese durch die Kontakteinrichtung (14) in Kontakt zueinander gebracht sind und die Lasereinrichtung (4) die Kontaktflächen (10) noch nicht erhitzt hat, und wobei die Steuereinrichtung (15) die Lasereinrichtung (4) und/oder die Kontakteinrichtung (14) derart steuert, dass die fertig verschweißten Bauelemente (1,2) die definierte SOLL-Gesamtlänge aufweisen.

15. Horizontalriegel, insbesondere für ein Gerüst (6), aufweisend ein Riegelrohr (1), wobei an wenigstens einer Stirnseite (1a,1b) des Riegelrohrs (1) ein Riegelkopf (2,3), insbesondere ein Riegelkopf, angeschweißt ist,
**dadurch gekennzeichnet, dass**
der Riegelkopf (2,3) mit einem Verfahren nach einem der Ansprüche 1 bis 11 an das Riegelrohr (1) angeschweißt ist und/oder der Riegelkopf (2,3) unter Verwendung einer Vorrichtung nach einem der Ansprüche 12 bis 14 an das Riegelrohr (1) angeschweißt ist, wobei das Riegelrohr (1) das erste Bauelement (1) und der Riegelkopf (2) das zweite Bauelement (2) ist.
